# FASCICULE DE BREVET EUROPEEN

(11) **EP 1 870 578 B1**
(45) Date de publication et mention de la délivrance du brevet: **26.08.2020**
(21) Numéro de dépôt: 07301078.7
(22) Date de dépôt: 31.05.2007
(51) Int. Cl.: F02F 1/42, F02B 31/06, F02B 31/08

(54) **DISPOSITIF D'ADMISSION D'AIR DANS UN CYLINDRE DE MOTEUR À COMBUSTION INTERNE**
EINLASSLEITUNGSANORDNUNG FÜR EINE BRENNKRAFTMASCHINE
INTAKE SYSTEM FOR AN INTERNAL COMBUSTION ENGINE

(30) Priorité: 20.06.2006 FR 0605453
(43) Date de publication de la demande: 26.12.2007
(73) Titulaire: Renault, 92109 Boulogne Billancourt (FR)
(72) Inventeur: Guerineau, Thomas, 92190 Meudon (FR)

(56) Documents cités:
- EP-A- 1 247 957
- EP-A- 1 493 910
- EP-A2- 1 167 719
- DE-A1- 3 828 742
- DE-A1- 19 919 533
- DE-C1- 10 128 500
- JP-A- 61 104 119
- JP-A- 61 167 123
- JP-A- H07 174 028

## Description

### DOMAINE TECHNIQUE DE L'INVENTION

La présente invention concerne un dispositif d'admission d'air dans un cylindre de moteur à combustion interne, en particulier pour un moteur Diesel, par exemple, à injection directe, ou pour un moteur à essence.

L'invention concerne plus particulièrement un dispositif d'admission d'air dans un cylindre de moteur à combustion interne comprenant un ou deux conduits d'admission par cylindre et autorisant l'obtention d'un compromis « rapport de tourbillonnement/perméabilité » optimisé pour tous les points de fonctionnement du moteur sans une dégradation trop importante de perméabilité.

### ARRIERE-PLAN TECHNOLOGIQUE DE L'INVENTION

Pour satisfaire les normes qui définissent la valeur maximale des émissions polluantes, il est nécessaire de réduire la consommation des moteurs. Cela demande une bonne maîtrise des paramètres de la phase de combustion afin de mieux contrôler cette dernière.

Pour assurer un mélange correct entre l'air et le carburant dans le cylindre d'un moteur à combustion interne (essence ou Diesel), il est nécessaire de maîtriser une aérodynamique interne dans le cylindre en général et dans la chambre de combustion en particulier, en imposant à l'air un mouvement de rotation. Ce mouvement de rotation de l'air autour d'un axe parallèle à l'axe du cylindre, est caractérisé par le rapport de la vitesse de rotation de l'air dans le cylindre à la vitesse de rotation du moteur. Ce rapport est appelé « rapport de tourbillonnement » ou, plus généralement « swirl ». Dans un moteur Diesel à injection directe, un tel rapport de tourbillonnement, nécessaire au moment de la phase d'injection, est particulièrement souhaité pour le fonctionnement du moteur à faible charge.

On définit en outre la perméabilité dans un cylindre de moteur à combustion, en particulier de moteur Diesel, comme étant la capacité d'un conduit à laisser passer un fluide à son travers. La perméabilité, qui illustre la différence de pression de part et d'autre de la soupape d'admission, ne dépend alors que des qualités aérodynamiques de la zone de passage du conduit qu'est le cylindre.

Généralement, une augmentation du rapport de tourbillonnement est associée à une chute importante de la perméabilité; en raison, par exemple, d'une diminution de la section effective de passage à l'admission.

De manière connue, lors du dimensionnement d'un moteur Diesel à injection directe on peut choisir une valeur de rapport de tourbillonnement qui représente un compromis sur l'ensemble de la plage de fonctionnement du moteur, avec un ou deux conduits d'admission. Cette valeur de rapport de tourbillonnement ne correspond cependant pas, dans ce cas, à la valeur optimale qui serait nécessaire pour les fortes charges, ni pour les charges faibles.

On connaît déjà dans l'état de la technique, des solutions traitant le problème d'optimisation des valeurs de rapport de tourbillonnement et de perméabilité quel que soit le mode de fonctionnement du moteur.

Une première solution traite le cas d'un moteur comprenant un seul conduit d'admission par cylindre et est décrite dans la demande de brevet DE 38 28 742 A1 ou la demande de brevet européen EP 1 247 957 A1. Cette dernière enseigne un conduit d'admission qui débouche dans le cylindre de manière sensiblement tangentielle par rapport au cylindre (colonne 4, § 21, lignes 1-6). En outre, le conduit d'admission dispose d'une paroi verticale (c'est-à-dire, suivant une direction parallèle à l'axe privilégié du cylindre) interne de séparation (colonne 4, § 23). Le but est de faire varier le rapport de tourbillonnement en obturant tout ou partie de la section du conduit divisé (colonne 4-5, § 27 ; colonne 5, § 30-31). Cette même approche est pratiquée par la demande de brevet européen EP 1 188 912 A1 pour les moteurs à combustion avec au moins deux conduits d'admission par cylindre (colonne 4, § 23-27 ; colonne 5, § 30-31).

Une autre approche traitant le cas d'un moteur comprenant deux conduits d'admission par cylindre est décrite dans le document JP 61 104119A et la demande de brevet européen EP 1 431 541 A1. Cette dernière enseigne que l'un de ces deux conduits d'admission, dit conduit de tourbillonnement, est destiné plus spécifiquement à conférer à l'air d'admission pénétrant dans le cylindre (et donc, dans la chambre de combustion) un mouvement de rotation. l'autre de ces deux conduits d'admission, dit conduit de remplissage, est agencé pour apporter le plus d'air possible dans le cylindre. Le conduit de tourbillonnement est de type hélicoïdal, c'est-à-dire, a une forme en tronçon d'hélice produisant continuellement un mouvement tourbillonnaire ordonné, avant de déboucher dans le cylindre (colonne 4, § 27). Le conduit de remplissage est de type tangentiel (colonne 3, § 20, colonne 4, § 26), comme ceux décrits dans EP 1 247 957 A1 et EP 1 188 912 A1. De même, Il est muni d'une paroi verticale interne de séparation (colonne 3, § 22-23) qui divise alors le conduit de remplissage en une première et une seconde parties de formes et de dimensions similaires (colonne 3, § 22, lignes 49-52).

Comme dans les cas divulgués par EP 1 247 957 A1 et EP 1 188 912 A1, la régulation continue du rapport de tourbillonnement dans le dispositif selon EP 1 431 541 A1 s'opère en fonction du mode de fonctionnement du moteur à l'aide des moyens d'obturation de tout ou partie de la section du conduit de remplissage (colonne 4, § 24-25). Ainsi, le rapport de tourbillonnement est minimal lorsque le conduit de remplissage n'est pas obturé et augmente au fur et à mesure de l'obturation de tout ou partie de la section de ce conduit de remplissage.

L'inconvénient majeur de tous ces dispositifs réside dans le fait que la perméabilité est très sensible à l'obturation du conduit de remplissage. Par exemple, pour le moteur comprenant deux conduits d'admission par cylindre comme celui décrit dans EP 1 431 541 A1, le conduit de remplissage contribue à environ 55% dans la perméabilité tandis que le conduit de tourbillonnement contribue à environ 45% dans la perméabilité. Il en résulte que lorsque l'on obture, par exemple complètement, le conduit de remplissage pour augmenter le rapport de tourbillonnement, il ne reste plus que 45% de la perméabilité. La dégradation de perméabilité est donc trop importante.

Un autre inconvénient est dû au fait que la paroi verticale interne de séparation crée un encombrement supplémentaire dans le packaging très contraignant des moteurs Diesel.

### DESCRIPTION GENERALE DE L'INVENTION

La présente invention a donc pour objet de supprimer un ou plusieurs des inconvénients de l'art antérieur en proposant, selon un premier mode de réalisation de l'invention, un dispositif d'admission d'air dans un cylindre de moteur à combustion interne comprenant un conduit d'admission par cylindre et autorisant l'obtention d'un compromis « rapport de tourbillonnement/perméabilité » optimisé pour tous les points de fonctionnement du moteur sans une dégradation trop importante de perméabilité.

A cet effet, l'invention concerne un dispositif d'admission d'air dans un cylindre de moteur à combustion interne, en particulier de moteur Diesel à injection directe ou de moteur à essence, de type comprenant
au moins un conduit d'admission d'air ou de mélange air/carburant reliant la culasse du moteur à la zone d'admission dans le cylindre comportant au moins une chapelle d'admission obturée par une soupape d'admission qui comporte une tige reliée à une tête de soupape,
et des moyens d'obturation réglables de manière progressive montés sur au moins l'une des parties dudit conduit d'admission d'air ou de mélange air/carburant,
caractérisé en ce que au moins un premier conduit d'admission et les moyens d'obturation sont agencés de façon à ce que la puissance du mouvement du tourbillonnement, résultant du seul écoulement de tourbillonnement dans le cylindre en absence de l'écoulement de remplissage, soit bien supérieure au besoin réel du moteur, autorisant ainsi la dégradation du mouvement de tourbillonnement, en maintenant au moins une partie de l'écoulement de remplissage, sans dégrader de façon trop important la perméabilité.

Selon un premier mode de réalisation, le dispositif est de type comprenant un conduit d'admission divisé en deux parties par une paroi interne de séparation, caractérisé en ce que l'orifice d'une première partie dite inférieure du conduit d'admission, destinée au « swirl » de l'air ou du mélange, débouche dans un segment dit inférieur de la chapelle d'admission à l'endroit le plus proche de la paroi périphérique du cylindre selon un angle α tel que 90° ≤ α ≤ 180° et a une section moindre dans le plan sensiblement perpendiculaire à l'axe privilégié du conduit d'admission comparée à celle de l'orifice de la seconde partie du conduit d'admission, cette seconde partie, dite supérieure, destinée au remplissage débouchant dans la chapelle d'admission plus près de l'axe privilégié du cylindre et à l'opposé, par rapport au plan formé par la paroi interne de séparation, du segment inférieur obturé par la soupape d'admission le long de l'axe privilégié de la tige reliée à la tête de soupape d'admission.

Selon une autre particularité du premier mode de réalisation de l'invention, la chapelle d'admission est raccordée au conduit d'admission de façon que l'axe privilégié du conduit d'admission soit incliné, par rapport à l'axe privilégié de la tige reliée à la tête de soupape, d'un angle ϕ tel que 0 ≤ ϕ ≤ 90°.

Selon une autre particularité du premier mode de réalisation de l'invention, le tremplin est disposé de façon que sa tangente soit perpendiculaire au plan comprenant à la fois l'axe privilégié du cylindre et l'axe privilégié de la tige reliée à la tête de soupape d'admission.

Selon une autre particularité du premier mode de réalisation de l'invention, au moins l'orifice de la partie supérieure du conduit d'admission débouchant dans le segment supérieur de la chapelle d'admission au-dessus du siège de soupape d'admission le long de son axe privilégié présente au moins une courbure de raccordement de rayon prédéterminé entre le conduit d'admission et la chapelle d'admission, cette courbure de raccordement étant tangente à au moins une droite de référence parallèle à l'axe privilégié du cylindre.

Selon une autre particularité du premier mode de réalisation de l'invention, le rayon prédéterminé de la courbure de raccordement dans le plan comprenant l'axe privilégié de la tige reliée à la tête de soupape d'admission rapporté au diamètre interne du siège de la soupape d'admission dans le plan perpendiculaire à l'axe privilégié de la tige reliée à la tête de soupape d'admission, forme un coefficient prédéterminé.

Selon un deuxième mode de réalisation de l'invention, le dispositif d'admission d'air dans un cylindre de moteur à combustion interne, en particulier de moteur Diesel à injection directe ou de moteur à essence, de type comprenant
au moins deux conduits d'admission d'air ou de mélange air/carburant par cylindre reliant la culasse du moteur à la zone d'admission dans le cylindre, chaque conduit débouchant dans deux chapelles d'admission respectives, sur deux soupapes d'admission respectives, qui comporte chacune une tige reliée à la tète de la soupape,
et des moyens d'obturation réglables de manière progressive montés dans au moins l'un et/ou l'autre des deux conduits d'admission.
caractérisé en ce que un premier conduit d'admission, destiné au « swirl » de l'air ou du mélange, débouche dans une première chapelle d'admission obturée par une première soupape d'admission, l'axe privilégié de la première chapelle d'admission étant parallèle à l'axe privilégié de la tige de la première soupape d'admission, et la distance entre l'axe privilégié du premier conduit d'admission immédiatement en amont de la première chapelle d'admission par rapport au sens d'écoulement d'air dans le conduit de tourbillonnement et l'axe privilégié du cylindre étant supérieure à la distance entre l'axe privilégié de la tige de la première soupape d'admission et l'axe privilégié du cylindre, et
un second conduit d'admission, destiné au remplissage du cylindre, débouche, par au moins une paroi interne de raccordement, dans une deuxième chapelle d'admission obturée par la deuxième soupape d'admission et dont au moins les parois interne sont sensiblement cylindriques, l'axe privilégié de la deuxième chapelle d'admission étant sensiblement parallèle ou faiblement incliné par rapport à l'axe privilégié de la tige de la deuxième soupape d'admission, et la longueur de la deuxième chapelle d'admission le long de son axe privilégié rapporté au diamètre interne du siège de la deuxième soupape d'admission forme un premier ratio prédéterminé,
et en ce que l'axe privilégié du premier conduit d'admission immédiatement en amont de ta première chapelle d'admission par rapport au sens d'écoulement d'air et/ou de mélange air/carburant dans le premier conduit d'admission, est sensiblement perpendiculaire au plan comprenant à la fois l'axe privilégié du cylindre et l'axe privilégié de la tige reliée à la tête de la première soupape d'admission, et
la paroi interne de raccordement inclinée d'un angle β tel que 0° < β < 180°, par rapport à l'axe privilégié de la tige de la deuxième soupape d'admission.

Selon une autre particularité du deuxième mode de réalisation de l'invention, la paroi interne de raccordement est située, d'une part, dans la partie du deuxième conduit d'admission la plus proche du cylindre, et, d'autre part, immédiatement en amont de la jonction formée entre le deuxième conduit d'admission et la deuxième chapelle d'admission par rapport au sens d'écoulement d'air et/ou de mélange d'air/carburant dans le conduit d'admission.

Selon une autre particularité du deuxième mode de réalisation de l'invention, la section du premier conduit d'admission perpendiculaire à l'axe privilégié du premier conduit d'admission rapportée à la section du deuxième conduit d'admission perpendiculaire à l'axe privilégié du deuxième conduit d'admission forme un deuxième ratio prédéterminé.

Selon une autre particularité du deuxième mode de réalisation de l'invention, le diamètre de la section de la première chapelle d'admission dans le plan perpendiculaire à l'axe privilégié de la tige de la première soupape d'admission et/ou le diamètre de la section du premier conduit d'admission perpendiculaire à son axe privilégié immédiatement en amont de la première chapelle d'admission par rapport au sens d'écoulement d'air dans le premier conduit d'admission, rapporté au diamètre intérieur du siège de la première soupape d'admission forme un troisième ratio prédéterminé.

Selon une autre particularité du premier ou du deuxième mode de réalisation de l'invention, au moins la partie supérieure ou le deuxième conduit d'admission, respectivement, sont obturés au moins partiellement par les moyens d'obturation.

Selon une autre particularité du premier ou du deuxième mode de réalisation de l'invention, les moyens d'obturation comprennent un clapet mobile en translation de type guillotine coulissante transversalement à l'axe privilégié du conduit d'admission.

Selon une autre particularité du premier ou du deuxième mode de réalisation de l'invention, les moyens d'obturation comprennent un clapet de type papillon, rotatif autour d'un axe de papillon perpendiculaire à l'axe privilégié du conduit d'admission, l'axe de papillon étant sensiblement parallèle au plan de la paroi interne de séparation, ce clapet étant monté à l'intérieur du conduit d'admission.

Selon une autre particularité du premier ou du deuxième mode de réalisation de l'invention, les moyens d'obturation comprennent un boisseau, rotatif autour d'un axe de boisseau perpendiculaire à l'axe privilégié du conduit d'admission, l'axe de boisseau étant sensiblement parallèle au plan de la paroi interne de séparation, ce boisseau étant monté partiellement à l'extérieur du conduit d'admission, conformément à l'une des configurations choisies parmi les configurations suivantes : (a) partiellement à l'extérieur du conduit d'admission dans la partie inférieure du conduit d'admission : (b) partiellement à l'extérieur du conduit d'admission dans la partie supérieure du conduit d'admission.

Un autre but de l'invention est de proposer un procédé qui permette d'atteindre le rapport de tourbillonnement recherché en fonction de la charge du moteur.

Ce but est atteint par un procédé d'admission d'air ou de mélange air/carburant mettant en œuvre un dispositif selon l'invention avec un moyen de mesure de la charge du moteur, comprenant au moins un réglage de l'obturation de la partie supérieure ou du deuxième conduit d'admission du flux de remplissage en déplaçant un moyen d'obturation, caractérisé en ce qu'il permet d'atteindre le rapport de tourbillonnement recherché en fonction de la charge du moteur mesurée
de sorte que l'obturation de la partie supérieure ou du deuxième conduit d'admission du flux de remplissage ne soit pas totale, pour atteindre un rapport de tourbillonnement dit haut lors du fonctionnement du moteur à faible charge, et
de sorte que l'obturation de la partie supérieure ou du deuxième conduit d'admission du flux de remplissage soit nulle, pour atteindre un rapport de tourbillonnement dit bas lors du fonctionnement du moteur à pleine charge.

L'invention avec ses caractéristiques et avantages ressortira plus clairement à la lecture de la description faite en référence aux dessins annexés dans lesquels :
Les figures 1 et 2 illustrent schématiquement, en vue de côté et de dessus respectivement, le premier mode de réalisation du dispositif selon l'invention,
La figure 3 illustre schématiquement en vue de côté le raccordement du conduit d'admission à la chapelle d'admission selon le premier mode de réalisation du dispositif selon l'invention,

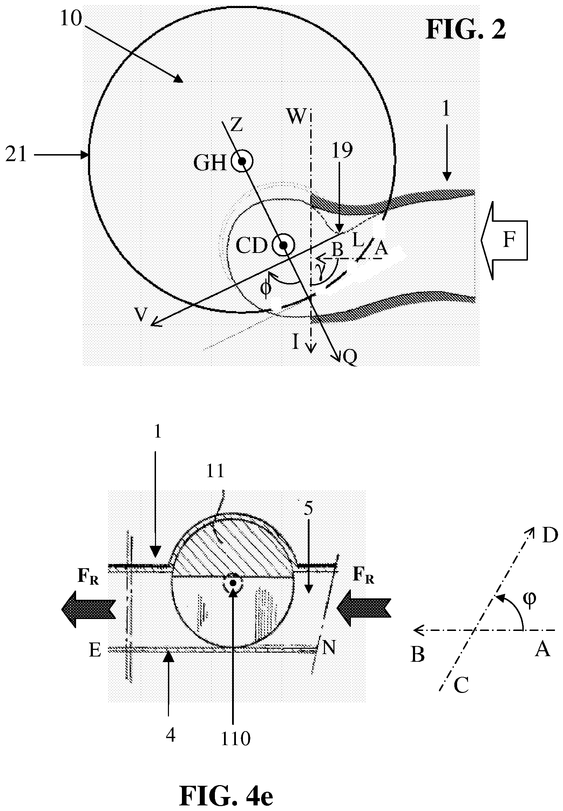

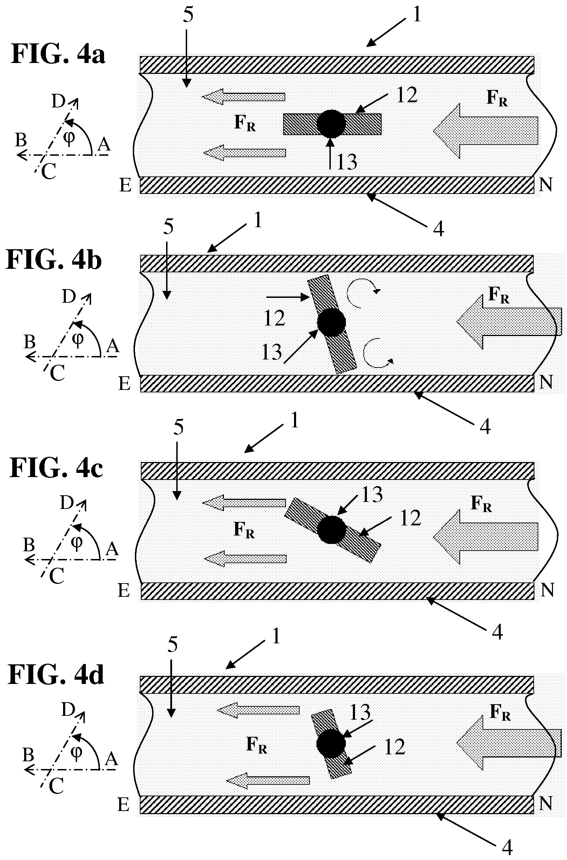

Les figures 4a à 4e représentent schématiquement un fragment du conduit d'admission en coupe (vue de côté) muni des différents moyens d'obturation d'au moins une partie du conduit d'admission. Ces moyens peuvent être un boisseau ou un clapet de type papillon ou volet. Ils peuvent être montés à l'intérieur du conduit d'admission, mais aussi en amont ou en aval du conduit par rapport au sens de l'écoulement. La figure 4a montre un clapet de type papillon ou volet pouvant obturer complètement le conduit d'admission, rotatif autour d'un axe de papillon perpendiculaire à l'axe privilégié du conduit d'admission, ce clapet monté à l'intérieur du conduit d'admission se trouve en position ouverte. La figure 4b présente le même clapet que la figure 4a, dans une position fermée obturant complètement le conduit d'admission. La figure 4c représente le même clapet de type papillon que les figures 4a et 4b dans une position intermédiaire « semi-ouverte/semi-fermée » qui obture partiellement le conduit d'admission. La figure 4d montre un clapet de type papillon, rotatif autour de l'axe de papillon perpendiculaire à l'axe privilégié du conduit d'admission, ce clapet étant perméable à l'écoulement d'air dans le conduit d'admission. La figure 4e: représente un boisseau rotatif autour d'un axe de boisseau perpendiculaire à l'axe privilégié du conduit d'admission, ce boisseau (en position ouverte, monté partiellement à l'extérieur du conduit d'admission dans la partie supérieure du conduit d'admission,
La figure 5 Illustre schématiquement en vue de dessus le raccordement du conduit d'admission de tourbillonnement à la zone d'admission dans le cylindre selon le deuxième mode de réalisation du dispositif selon l'invention,
La figure 6 illustre schématiquement en vue de dessus le raccordement du conduit d'admission de remplissage à la zone d'admission dans le cylindre selon le deuxième mode de réalisation du dispositif selon l'invention,
La figure 7 illustre schématiquement en vue de côté le raccordement du conduit d'admission de remplissage à la chapelle d'admission de remplissage selon le deuxième mode de réalisation du dispositif selon l'invention,
La figure 8 illustre schématiquement en vue de dessus le principe de fonctionnement du deuxième mode de réalisation du dispositif selon l'invention,
La figure 9 représenté les courbes de perméabilité en fonction du rapport de tourbillonnement illustrant schématiquement le gain en perméabilité obtenu à l'aide du dispositif selon l'invention par rapport à un dispositif de l'état de la technique.

### DESCRIPTION DES MODES DE REALISATION PREFERES DE L'INVENTION

L'invention présente un dispositif d'admission d'air dans un cylindre de moteur à combustion interne dans lequel le flux d'air à l'admission est macroscopiquement séparé en deux écoulements, l'un contribuant notamment au remplissage en air du cylindre et l'autre contribuant notamment au mouvement de tourbillonnement (rotation) d'air dans le cylindre. Dans un premier mode de réalisation de l'invention détaillé à titre d'exemple non exhaustif ci-après, le cylindre est muni d'au moins un conduit d'admission reliant la culasse du moteur à la zone d'admission dans le cylindre obturée par une soupape d'admission unique. Le flux d'air à l'admission y est macroscopiquement séparé à l'aide d'une paroi interne de séparation selon l'invention agencée à l'intérieur du conduit d'admission unique. Dans un deuxième mode de réalisation de l'invention détaillé à titre d'exemple non exhaustif ci-après, le cylindre est muni d'au moins deux conduits d'admission reliant la culasse du moteur à la zone d'admission dans le cylindre obturée respectivement par au moins deux soupapes d'admission. L'un des deux conduits d'admission y est dédié spécifiquement au remplissage du cylindre d'air, l'autre y est dédié spécifiquement au mouvement de tourbillonnement (rotation) d'air dans le cylindre. Bien entendu, ces deux modes, de réalisation ne sont aucunement limitatifs. L'invention porte donc également sur une combinaison quelconque de ces deux modes de réalisation. De même, l'invention porte aussi sur les dispositifs d'admission d'air comprenant un nombre quelconque des conduits d'admission par cylindre.

Des moyens d'obturation d'au moins une partie du conduit d'admission (mode n°1) ou d'au moins un des deux conduits d'admission (mode n°2) sont réglables de manière progressive pour faire varier individuellement les débits des écoulements de remplissage et/ou de tourbillonnement afin d'obtenir un rapport de tourbillonnement propre à chaque point de fonctionnement du moteur.

Quel que soit le mode de réalisation de l'invention, la structure avantageuse du dispositif selon l'invention permet, lorsque l'écoulement de tourbillonnement débite seul dans le cylindre en absence de l'écoulement de remplissage, d'atteindre un mouvement de tourbillonnement dans le cylindre très puissant. Sa puissance est telle que le rapport de tourbillonnement qui en résulte est bien supérieur, par exemple, quatre fois supérieur, au besoin réel du moteur. Par conséquent, il est possible de le dégrader, par exemple, en maintenant au moins une partie du débit de l'écoulement de remplissage dans le cylindre, sans dégrader les performances du moteur. A un rapport de tourbillonnement constant, cela permet de conserver dans le cylindre une perméabilité supérieure à celle obtenue à l'aide des dispositifs connus de l'état de la technique. En d'autres termes, le dispositif d'admission selon l'invention permet d'obtenir un compromis « rapport de tourbillonnement/perméabilité » optimisé pour tous les points de fonctionnement du moteur sans une dégradation trop importante de perméabilité.

### Mode de réalisation n°1 (cylindre avec un conduit d'admission unique obturé par une soupape d'admission unique)

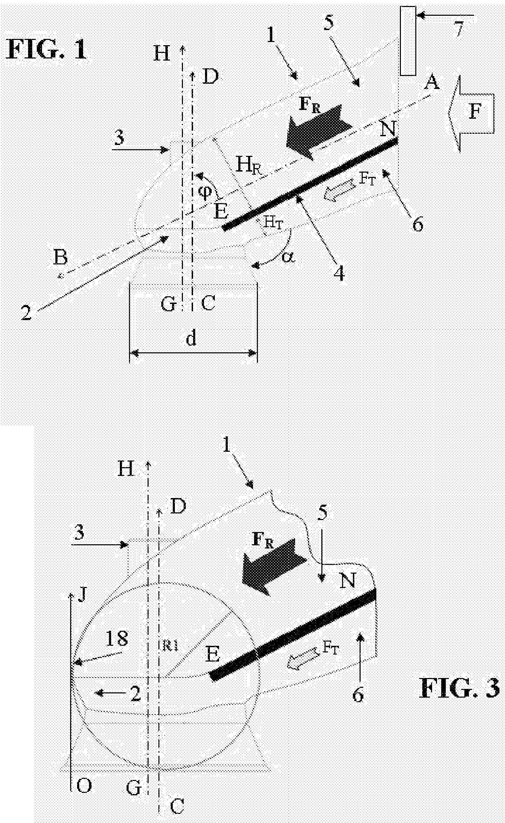

Tel qu'il est illustré sur tes figures 1 à 4, le premier mode de réalisation de l'invention porte sur un dispositif d'admission pour un moteur à combustion interne, par exemple, pour un moteur Diesel à injection directe, comprenant un seul conduit d'admission (1) pour chaque cylindre (10). Ce conduit d'admission (1) relie la face supérieure (dans le sens de l'axe privilégié du cylindre) de la chambre de combustion (face feu de la culasse) à l'entrée de la culasse par laquelle pénètre l'air selon la flèche (F). Le conduit (1) débouche dans une chapelle d'admission (2) sur une soupape d'admission, qui comporte une tige (3) reliée à la tête de soupape (non représenté sur les figures).

La chapelle d'admission (2) est un volume en forme de cuve, par exemple, sensiblement cylindrique, ou ovoïde, ou conique, ouverte à l'extrémité du cylindre (10) sur laquelle une tête de soupape vient appuyer. Cette cuve est percée à l'autre extrémité pour laisser passer la tige (3) de la soupape. La cuve est raccordée au conduit d'admission (1) de façon que l'axe privilégié du conduit d'admission (1), par exemple son axe de symétrie (AB), soit incliné d'un angle ϕ tel que 0 ≤ ϕ ≤ 90°, par rapport à l'axe privilégié de la tige (3), par exemple, son axe de symétrie (CD), la tige (3) étant reliée à la tête de soupape d'admission.

Le segment supérieur de la chapelle d'admission (2) peut disposer des agencements particuliers pour faciliter son perçage, Par exemple, le segment supérieur de la chapelle d'admission (2) peut présenter un volume en forme de cuve quelconque ouverte à l'extrémité du cylindre (10) sur laquelle une tête de soupape vient appuyer, par exemple, en forme de cuve hémisphérique, conique (y compris en forme de dé, par exemple, de type dé à coudre), cubique, prismatique, pyramidale, parabolique, etc. dont la section dans le plan contenant l'axe de la tige (3) reliée à la tête de soupape, puisse présenter des profils quelconques compatibles à l'écoulement d'un fluide tel que l'air.

Comme Illustré par les figures 1 et 3, le conduit d'admission (1) est divisé, par rapport au sens de l'axe privilégié (CD) de la tige (3) reliée à la tête de soupape d'admission, en deux parties, l'une dite supérieure (5) et l'autre dite inférieure (6), par une paroi interne de séparation (4). Cette dernière est schématisée à l'aide d'une traînée continue noire grasse référencée (EN) sur les figures 1 et 3. La paroi interne de séparation (4) est, par exemple, sensiblement plane dans le sens de la longueur du conduit d'admission (1).

La partie inférieure (6) du conduit d'admission (1) se raccorde avec la zone formant un siège de soupape selon un angle α tel que : 90 ≤ α ≤ 180°, En d'autres termes, la partie intérieure (6) du conduit d'admission (1) débouche dans un segment dit inférieur de la chapelle d'admission (2) obturé par la soupape d'admission,

La partie supérieure (5) du conduit d'admission (1) débouche dans un autre segment dit supérieur de la chapelle d'admission (2), à l'opposé, par rapport au plan (EF) formé par la paroi interne de séparation (4)), du segment inférieur obturé par la soupape d'admission le long de l'axe privilégié de la tige (3) reliée à la tête de soupape d'admission.

Il en résulte que l'écoulement d'air (F) à l'admission (figures 1, 3) dans le conduit d'admission (1) est macroscopiquement séparé, par rapport au sens de l'axe privilégié (CD) de la tige (3) reliée à la tête de soupape d'admission, dans ses parties supérieure (5) et inférieure (6) respectivement en écoulement dit supérieur (F_{R}) et en écoulement dit inférieur (F_{T}). Ces écoulements, supérieur (F_{R}) et inférieur (P_{T}), sont représentés de manière schématique sur les figures 1 et 3 par des flèches foncées (F_{R}) et claires (F_{T}) respectivement.

La paroi interne de séparation (4) s'étend sur toute la longueur du conduit d'admission (1), c'est-à-dire, depuis l'orifice d'entrée du conduit d'admission (1) en liaison avec l'entrée de la culasse (non représentée sur les figures) jusqu'à proximité immédiate de l'axe privilégié (CD) de la tige (3) reliée à la tête de soupape d'admission.

Dans une variante du premier mode de réalisation de l'invention, la paroi interne de séparation (4) s'étend sur une partie seulement de la longueur du conduit d'admission (1), par exemple, sur une partie de la longueur du conduit d'admission (1) à proximité immédiate de la chapelle d'admission (2), c'est-à-dire, immédiatement en amont du raccordement du conduit d'admission (1) à la chapelle d'admission (2) par rapport au sens d'écoulement (F, F_{R}, F_{T}) d'air d'admission.

Dans une autre variante du premier mode de réalisation de l'invention, la paroi interne de séparation (4) est plus courte, n'allant pas jusqu'à proximité immédiate de l'axe privilégié de la soupape de d'admission. La distance exacte entre l'axe privilégié de la soupape de d'admission et la paroi de séparation interne (4) ainsi raccourcie est déterminée de telle sorte que l'écoulement (F) dans le conduit d'admission (1) reste aérodynamiquement divisé en deux parties (F_{R} et F_{T}) malgré l'absence de la paroi interne de séparation (4) à proximité immédiate de la chapelle d'admission (2).

Ainsi, l'écoulement supérieur (F_{R}) débouche essentiellement dans la chapelle d'admission (2) plus près de l'axe privilégié du cylindre (10), par exemple, son axe de symétrie (GH). L'écoulement supérieur (F_{R}) participe surtout au remplissage en air du cylindre (10), sa contribution à la création du rapport de tourbillonnement étant quasi négligeable. Par conséquent, l'écoulement supérieur (F_{R}) issu de la partie supérieure (5) du conduit d'admission (1), est essentiellement responsable de la perméabilité.

Quant à l'écoulement inférieur (F_{T}), il débouche dans la chapelle d'admission (2) à l'endroit le plus proche de la paroi périphérique (21) (carter) du cylindre (10). L'écoulement inférieur (F_{T}) est orienté vers la paroi du cylindre (10) et crée ainsi un fort mouvement de tourbillonnement (rotation) dans le cylindre (10). Par conséquent l'écoulement inférieur (F_{T}) issu de la partie inférieure (6) du conduit d'admission (1) contribue pour l'essentiel au mouvement de rotation d'air dans le cylindre (10) et, donc, à la génération du rapport de tourbillonnement.

Dans une autre variante du premier mode de réalisation de l'invention, le plan (EF) formé par la paroi interne de séparation (4) est parallèle à l'axe privilégié (AB) du conduit d'admission (1). Le plan formé par la paroi interne de séparation (4) ne comprend donc pas l'axe privilégié (AB) du conduit d'admission (1),

En outre, la paroi interne de séparation (4) peut être en forme d'une gouttière dont la section perpendiculaire au sens d'écoulement d'air (F_{R}, P_{T}) puisse présenter des profils quelconques, par exemple, en forme de V, de U, de W, etc. compatibles à l'écoulement d'un fluide tel que l'air.

Dans une autre variante du premier mode de réalisation de l'invention, l'axe (WI) coïncidant avec la lisière de la paroi interne de séparation (4) donnant sur la chapelle d'admission (2), peut être incliné par rapport à l'axe privilégié (CD) de la tige (3) reliée à la tête de soupape d'admission. Comme le montre la figure 2, l'axe (WI) coïncidant avec la lisière de la paroi interne de séparation (4) donnant sur la chapelle d'admission (2), peut également être sensiblement perpendiculaire par rapport à l'axe privilégié (CD) de la tige (3) reliée à la tête de soupape d'admission.

Dans une autre variante du premier mode de réalisation de l'invention. l'axe (WI) coïncidant avec la lisière de la paroi interne de séparation (4) donnant sur la chapelle d'admission (2), peut être incliné d'un angle γ par rapport à l'axe privilégié (AB) du conduit d'admission (1). Comme le montre la figure 2, l'axe (WI) coïncidant avec la lisière de la paroi interne de séparation (4) donnant sur la chapelle d'admission (2), peut également être sensiblement perpendiculaire (γ = 90°) par rapport à l'axe privilégié (AB) du conduit d'admission (1).

Dans une autre variante du premier mode de réalisation de l'invention, la lisière de la paroi interne de séparation (4) donnant sur la chapelle d'admission (2) est curviligne avec une inclinaison par rapport à l'axe privilégié (AB) du conduit de l'admission (1) et/ou avec une inclinaison par rapport à l'axe privilégié (CD) de la tige (3) reliée à la tète de soupape d'admission.

Dans une autre variante du premier mode de réalisation de l'invention, les parois du conduit d'admission (1) en aval de la chapelle d'admission (2) comportent des moyens particuliers de formes géométriques variées comme, par exemple, des stries, des plis, des rides, des fentes, des rainures, des courbures, des saillies etc. favorisant et/ou renforçant le mouvement de rotation communiqué par le dispositif selon l'invention à l'air d'admission pénétrant dans le cylindre (10).

Des moyens d'obturation capables d'obturer au moins partiellement au moins l'une et/ou l'autre des deux parties (supérieure (5) ou inférieure (6)) du conduit d'admission (1) comprennent, par exemple, un clapet mobile en translation de type guillotine (7) coulissante transversalement à l'axe privilégié du conduit d'admission (1). Ainsi, il est possible de réguler, par exemple séparément :
- soit l'écoulement supérieur (FR) essentiellement responsable de la perméabilité, en laissant l'écoulement inférieur (FT) inchangé,
- soit l'écoulement inférieur (FT), essentiellement responsable du rapport de tourbillonnement, en laissant l'écoulement supérieur (FR) inchangé,
- soit réguler à la fois les deux écoulements (supérieure (F_{R}) et inférieure (F_{T})).

Il est ainsi possible d'obtenir, pour chacun des points de fonctionnement du moteur, un compromis optimisé entre le rapport de tourbillonnement et la perméabilité.

A titre d'illustration, la figure 1 montre schématiquement la guillotine (7) obturant partiellement la partie supérieure (5) du conduit d'admission (1). Cette guillotine (7) peut être actionnée, par exemple, à l'aide d'une tige de commande (non représentée sur la figure 1).

Dans une autre variante du premier mode de réalisation de l'invention illustrée sur les figures 4a-d, un moyen d'obturation comprend un clapet du type papillon (12) ou volet, rotatif autour d'un axe (13) de papillon (12) perpendiculaire à l'axe privilégié (AB) du conduit d'admission (1), l'axe (13) de papillon (12) étant, par exemple, sensiblement parallèle au plan (EF) de la paroi interne de séparation (4), ce clapet étant monté à l'intérieur du conduit d'admission (1).

Dans une autre variante du premier mode de réalisation de l'invention illustré schématiquement sur la figure 4d, le corps formant les moyens d'obturation est au moins partiellement perméable à l'écoulement d'air dans le conduit d'admission (1). Ce corps peut, par exemple, se présenter comme un clapet de type papillon ou volet percé de trous. Un autre exemple du corps formant les moyens d'obturation perméable à l'écoulement d'air est un clapet de type papillon dont la taille, par exemple, son diamètre maximal, est inférieure au diamètre de la partie du conduit d'admission à obturer.

Dans une autre variante du premier mode de réalisation de l'invention illustrée sur la figure 4e, un moyen d'obturation comprend un boisseau (11). rotatif autour d'un axe (110) de boisseau (11) perpendiculaire à l'axe privilégié du conduit d'admission (1), l'axe (110) de boisseau (11) étant sensiblement parallèle au plan de la paroi interne de séparation (4), ce boisseau (11) étant monté partiellement à l'extérieur du conduit d'admission (1) et qui peut être dispose, par exemple, dans la partie supérieure (5) du conduit d'admission (1) comme le montre à titre d'illustration la figure 4e, ou dans la partie inférieure (6) du conduit d'admission (1) (non représenté sur les figures).

Dans une autre variante du premier mode de réalisation de l'invention, les deux parties (5, 6) du conduit d'admission (1) débouchant dans la chapelle d'admission (2) forment deux orifices de tailles différentes.

Dans une autre variante du premier mode de réalisation de l'invention, les deux parties (5, 6) du conduit d'admission (1) séparées par la paroi interne de séparation (4) forment deux passages d'air de volumes différents dans le conduit d'admission (1). La paroi interne de séparation (4) divise donc le conduit d'admission (1) en deux parties, supérieure (5) et inférieure (6), de formes et de dimensions différentes sur au moins une partie du conduit d'admission (1), voire sur toute la longueur du conduit d'admission (1) (figure 1).

Dans une autre variante du premier mode de réalisation de l'invention, l'orifice de la partie du conduit d'admission (1), par exemple, l'orifice de la partie inférieure (6) du conduit d'admission (1) (figures 1, 3), débouchant dans la chapelle d'admission (2) à l'endroit le plus proche de la paroi périphérique (21) (carter) du cylindre (10) a une section (H_{T}) moindre dans le plan sensiblement perpendiculaire à l'axe privilégié (AB) du conduit d'admission (1) comparée à celle (H_{R}) de l'orifice de la partie du conduit d'admission (1), par exemple, de l'orifice de la partie supérieure (5) du conduit d'admission (1) (figures 1, 3), débouchant dans la chapelle d'admission (2) plus prés de l'axe privilégié du cylindre (10), par exemple, son axe de symétrie (GH). Cela permet d'accentuer davantage un fort mouvement de tourbillonnement (rotation) dans le cylindre (10), notamment en absence d'écoulement de remplissage (F_{R}) lorsque la partie supérieure (5) du conduit d'admission (1) est complètement obturé par les moyens d'obturations (7) et l'écoulement de tourbillonnement (Fγ) issu la partie inférieure (6) du conduit d'admission (1) débite seule,

A titre d'illustration, le conduit d'admission (1) muni du tremplin (19) selon l'invention et présentant le rapport (H_{T}/ (H_{T} + H_{R})] tel que 0.15 < [H_{T}/ (H_{T} + H_{R})] < 0.5, permet, lorsque la partie supérieure (5) du conduit d'admission (1) est complètement obturé par les moyens d'obturations (7) et que la partie inférieure (6) du conduit d'admission (1) débite seule l'écoulement de tourbillonnement (F_{T}), d'atteindre un rapport de tourbillonnement (rotation) au moins quatre fois plus important que celui obtenu lorsque les deux parties (supérieures (5) et inférieure (6)) du conduit d'admission (1) débitent respectivement l'écoulement de remplissage (F_{R}) et l'écoulement de tourbillonnement (F_{T}).

Un autre moyen avantageux du premier mode de réalisation de l'invention permettant d'accentuer davantage le fort mouvement de tourbillonnement (rotation) dans le cylindre (10), est schématisé sur la figure 2 à l'aide de la référence (19). Il s'agit d'un tremplin (19) disposé dans l'orifice de la partie inférieur (6) du conduit d'admission (1) débouchant dans le segment inférieur de la chapelle d'admission (2). Ce tremplin (19) est agencé sur le côté de l'orifice le plus près de l'axe privilégie (GH) du cylindre (10) et est orienté vers le côté de l'orifice le plus éloigné de l'axe privilégié (GH) du cylindre (10). Ainsi, en absence d'écoulement de remplissage (F_{R}) lorsque la partie supérieure (5) du conduit d'admission (1) est complètement obturée par les moyens d'obturations (7) et l'écoulement de tourbillonnement (F_{T}) issu de la partie inférieure (6) du conduit d'admission (1) débite seule, le tremplin (19) oriente avantageusement l'écoulement de tourbillonnement (F_{T}) vers la paroi périphérique (21) du cylindre (10). En d'autres termes, une fois pénétré dans le cylindre, l'écoulement de tourbillonnement (H_{T}) se propage donc le long de la paroi périphérique (21) du cylindre (10) en bénéficiant de sa courbure pour déclencher davantage de tourbillonnement.

A titre de complémentarité rappelons qu'au cours des quatre cycles (admission, compression, explosion et détente, échappement) désormais classiques du fonctionnement de moteur à combustion interne, un piston (non représenté sur les figures) relié à un vilebrequin (non représenté sur les figures) et coopérant avec le cylindre (10), se déplace dans l'axe de symétrie (GH) du cylindre (10) le long de la paroi périphérique (21) (carter) du cylindre (10) entre les deux points morts en bas et en haut du cylindre en alternant mouvement descendant et mouvement ascendant et vice versa. Le corps du piston est muni dans sa partie supérieure dans le sens de l'axe privilégié (GH) du cylindre (10) d'un logement en forme d'un volume ouvert à l'extrémité sur une face feu du piston, par exemple, en regard à la zone d'admission obturée par la soupape d'admission. Ce logement dit « bol de piston », forme de manière connue (en association avec une face feu de la culasse) une chambre de combustion lorsque le piston se trouve dans son point mort haut à la fin du cycle de compression. Les parois internes du bol de piston sont courbées de manière à favoriser la rotation de la masse gazeuse confinée dans la chambre de combustion à la fin du cycle de compression, A titre d'exemple, le bol de piston peut être symétrique par rapport à l'axe de symétrie (GH) du cylindre (10) avec une partie centrale du bol de piston, par exemple, surélevée par rapport à une partie latérale périphérique du bol de piston de manière à ce que la partie latérale périphérique ressemble à un tore implanté dans le corps du piston et ouvert sur la face feu du piston. Par conséquent, l'écoulement de tourbillonnement (F_{T}) pénétrant dans le cylindre (10) dès le début du cycle d'admission, se propageant le long de la paroi périphérique (21) (carter) du cylindre (10) et formant le tourbillonnement dans le cylindre, peut bénéficier également de la courbure du bol de piston pour y déclencher la rotation de l'air (masse gazeuse).

Pour renforcer encore davantage le fort mouvement de tourbillonnement (rotation) dans le cylindre (10), dans une autre variante du premier mode de réalisation de l'invention, le tremplin (19) est disposé de façon que sa tangente (LV) soit inclinée d'un angle φ, par exemple, d'un angle φ tel que 0 ≤ φ ≤ 90°, par rapport au plan (ZQ) comprenant à la fois l'axe privilégié (GH) du cylindre (10) et l'axe privilégié (CD) de la tige (3) reliée à la tête de soupape d'admission.

Comme illustré sur la figure 2, dans une autre variante du premier mode de réalisation de l'invention, le tremplin (19) est disposé de façon que sa tangente (LV) soit perpendiculaire au plan (ZQ) comprenant à la fois l'axe privilégié (GH) du cylindre (10) et l'axe privilégié (CD) de la tige (3) reliée à la tête de soupape d'admission.

Parallèlement aux moyens décrits portant sur la partie inférieure (6) du conduit d'admission (1) et visant à renforcer davantage le fort mouvement de tourbillonnement (rotation) dans le cylindre (10), le premier mode de réalisation de l'invention peut comprendre d'autres moyens avantageux portant sur la partie supérieure (5) du conduit d'admission (1) et visant à dégrader a priori tout tourbillonnement induit par l'écoulement de remplissage (F_{R}). En d'autres termes, le dispositif selon l'invention vise à la fois à :
- maximiser la contribution dans le rapport de tourbillonnement de l'écoulement de tourbillonnement (F_{T}), et
- minimiser la contribution dans le rapport de tourbillonnement de l'écoulement de remplissage (F_{R}).

Pour minimiser la contribution dans le rapport de tourbillonnement de l'écoulement de remplissage (F_{R}), il faut diriger ce dernier le plus près possible de l'axe privilégié, par exemple l'axe de symétrie (GH), du cylindre (10) et, donc, de l'axe privilégié du bol de piston. En outre, le débit de l'écoulement de remplissage (F_{R}) doit se faire de manière la plus isotrope possible autour de l'axe privilégié, par exemple l'axe de symétrie (CD), de la tige (3) reliée à la tête de soupape d'admission, en évitant de générer une quantité de mouvement dans le plan perpendiculaire à l'axe privilégié (CD) de la tige (3) et/ou de l'axe privilégié, par exemple l'axe de symétrie (GH), du cylindre (10), qui serait favorable au tourbillonnement dans le cylindre (10) et/ou dans le bol du piston.

Pour cela et comme illustré sur la figure 3, dans une autre variante du premier mode de réalisation de l'invention, l'orifice de la partie supérieure (5) du conduit d'admission (2) débouchant dans le segment supérieur de la chapelle d'admission (2) au-dessus du siège de soupape d'admission le long de son axe privilégié, par exemple son axe de symétrie (CD), présente au moins une courbure de raccordement (18) de rayon (R1) prédéterminé entre le conduit d'admission (1) et la chapelle d'admission (2), cette courbure de raccordement (18) étant tangente à au moins une droite de référence (OJ) parallèle à l'axe privilégié (GH) du cylindre (10).

De même et comme illustré sur les figures 1 et 3, dans une autre variante du premier mode de réalisation de l'invention, le rayon (R1) prédéterminé de la courbure de raccordement dans le plan comprenant l'axe privilégié de la tige (3) reliée à la tête de soupape d'admission rapporté au diamètre interne (d) du siège de la soupape d'admission dans le plan perpendiculaire à l'axe privilégié (CD) de la tige (3) reliée à la tête de soupape d'admission, forme un coefficient prédéterminé, par exemple : R1/d ≈ ½.

En résumé, le dispositif d'admission selon le premier mode de réalisation de l'invention permet :
- d'atteindre un rapport de tourbillonnement dit bas (T1), requis pour le bon fonctionnement du moteur, par exemple, à pleine charge, lorsque les deux parties, supérieure (5) et inférieure (6), du conduit d'admission (1) débitent ensemble respectivement l'écoulement de remplissage (FR) et l'écoulement de tourbillonnement (FT) ;
- d'atteindre un rapport de tourbillonnement dit culminant (T₃), lorsque l'écoulement de tourbillonnement (F_{T}) débite seul via la partie inférieure (6) du conduit d'admission (1), la partie supérieure (5) du conduit d'admission (1), formant l'écoulement de remplissage (F_{R}), étant complètement obturée par les moyens d'obturation. Le rapport de tourbillonnement culminant est environ quatre à dix fois supérieur au rapport de tourbillonnement bas évoqué précédemment : 4T₁ ≤ T₃ ≤ 10T₁ ;
- d'attendre un rapport de tourbillonnement (T0) quasi nul ou nul, voire négatif, lorsque l'écoulement de remplissage (FR) débite seul via la partie supérieure (5) du conduit d'admission (1), la partie inférieure (6) du conduit d'admission (1) étant complètement obturée par les moyens d'obturation : T0 < T1 ;
- d'atteindre un rapport de tourbillonnement dit haut (T₂), requis pour le bon fonctionnement du moteur, par exemple, à faible charge, lorsque l'écoulement de remplissage (F_{R}) via la partie supérieure (5) du conduit d'admission (1) n'est pas obturé complètement (par exemple, à 80%) sous l'action des moyens d'obturation, et que l'écoulement de tourbillonnement (F_{T}) s'effectue via la partie inférieure (6) non obturée du conduit d'admission (1). Le rapport de tourbillonnement T₂ est environ deux à quatre fois supérieur au rapport de tourbillonnement bas évoqué précédemment : 2T₁ < T₂ < 4T₁.

Comme précisé précédemment, les moyens d'obturation sont réglables de manière progressive. Par conséquent, le dispositif selon le premier mode de réalisation de l'invention permet, bien entendu, d'atteindre un rapport de tourbillonnement intermédiaire (T_{γ}) entre le rapport haut (T₂) et le rapport bas (T₁) : T₁ ≤ T_{γ} ≤ T₂, pour assurer le bon fonctionnement du moteur au cours de ses régimes de fonctionnement intermédiaires, respectivement entre sa faible charge (correspondant au rapport de tourbillonnement haut (T₂)) et sa pleine charge (correspondant au rapport de tourbillonnement bas (T₁)).

### Mode de réalisation n°2 (cylindre avec deux conduits d'admission obturés respectivement par deux soupapes d'admission)

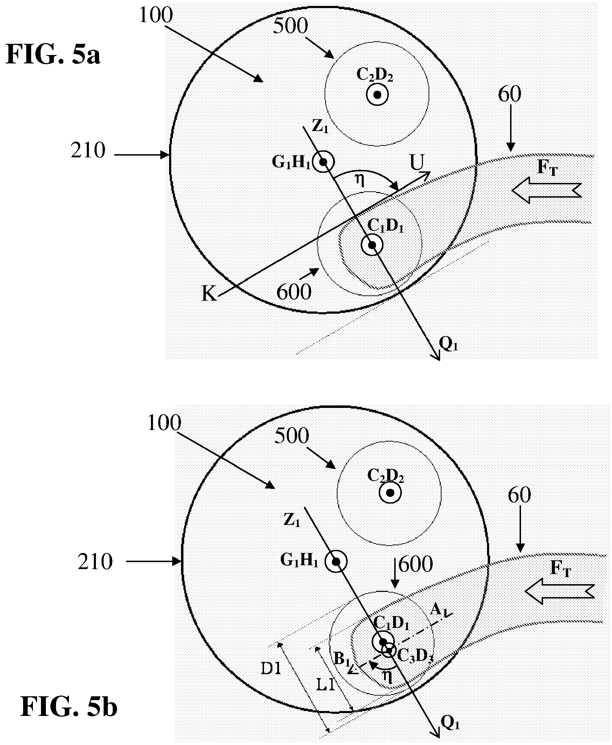

Tel qu'il est illustré sur les figures 5 à 9, le deuxième mode de réalisation de l'invention porte sur un dispositif d'admission pour un moteur à combustion interne, par exemple, pour un moteur Diesel à injection directe, comprenant deux conduits d'admission (50, 60) pour chaque cylindre (100). Ces deux conduits d'admission, dits premier (60) conduit d'admission et deuxième (50) conduit d'admission, relient la face supérieure (dans le sens de l'axe privilégié (G₁H₁) du cylindre (100)) de la chambre de combustion (face feu de la culasse formant respectivement deux zones d'admission dites première zone d'admission (600) et deuxième zone d'admission (500)) à l'entrée de la culasse par laquelle pénètre l'air.

Chacun des deux conduits d'admission débouche dans deux chapelles d'admission respectives, dites première chapelle d'admission et deuxième chapelle d'admission, sur deux soupapes d'admission respectives, qui comportent chacune une tige reliée à la tête de soupape (non représenté sur les figures). L'axe privilégié, par exemple l'axe de symétrie, de chacune des deux chapelles d'admission peut, par exemple, être parallèle à l'axe privilégié, par exemple l'axe de symétrie, de la tige de la soupape d'admission correspondante.

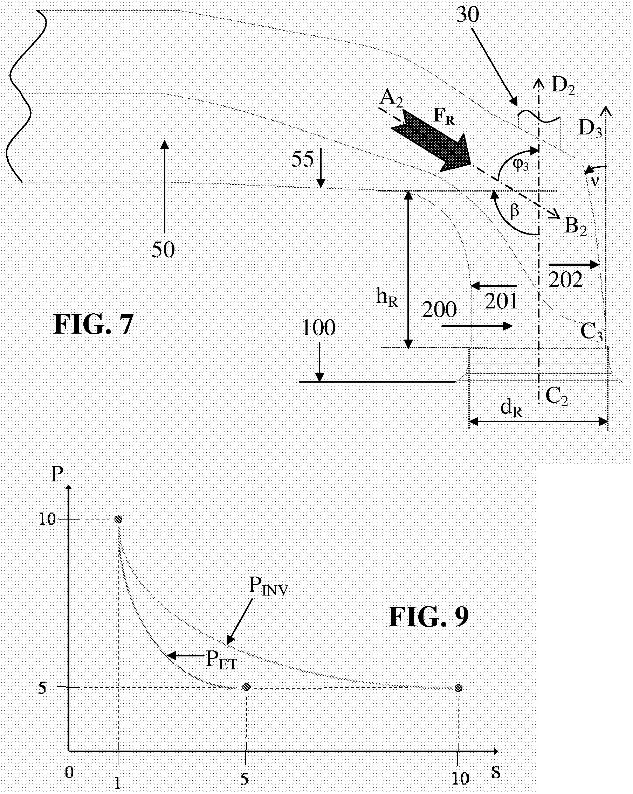

Chacune des deux chapelles d'admission se présente comme un volume en forme de cuve, par exemple, sensiblement cylindrique dans l'exemple relatif à la deuxième (200) chapelle d'admission illustrée sur la figure 7, ouverte à l'extrémité du cylindre (100) sur laquelle une tête de soupape vient appuyer. Cette cuve est percée à l'autre extrémité pour laisser passer la tige (30) de la soupape d'admission respective (deuxième soupape d'admission dans l'exemple de la figure 7). La cuve est raccordée au conduit d'admission respectif (deuxième conduit d'admission (50) dans l'exemple de la figure 7) de façon que l'axe privilégié du conduit d'admission, par exemple son axe de symétrie (A₂B₂) (figure 7), soit incliné d'un angle ϕ₃ tel que 0 ≤ ϕ₃ ≤ 90°, par rapport à l'axe privilégié de la tige (30), par exemple, son axe de symétrie (C₂D₂), la fige (30) étant reliée à la tête de soupape d'admission respective.

En outre, chacune des deux chapelles d'admission du deuxième mode de réalisation peut disposer des agencements particuliers pour faciliter son perçage comme, par exemple, ceux du premier mode de réalisation décrits ci-dessus.

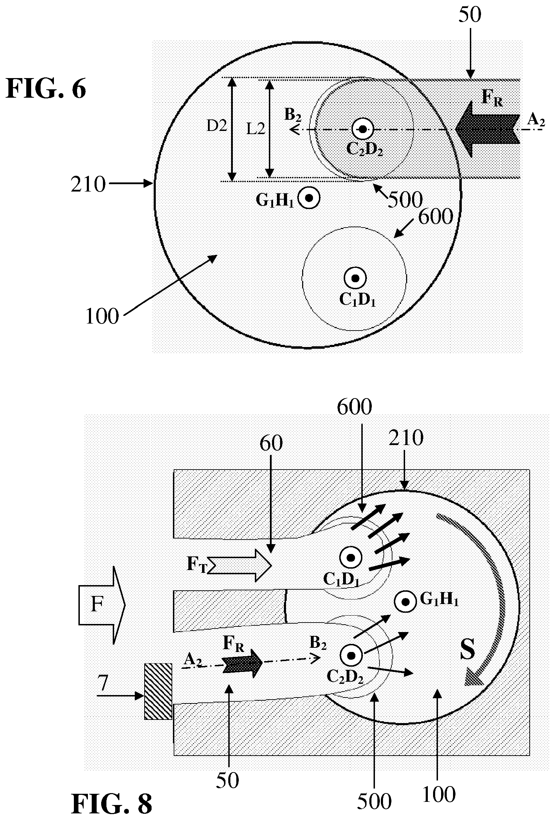

Grâce aux deux conduits d'admission (60, 50), l'écoulement d'air (F) à l'admission, par exemple, à l'entrée de la culasse, est macroscopiquement séparé en deux parties, comme le montre de manière très simplifiée le schéma sur la figure 8 :
- le premier écoulement référencé (FT) traversant le premier conduit d'admission (60) pour pénétrer dans le cylindre (100) via la première zone d'admission (600), et
- le deuxième écoulement référencé (F_{R}), traversant le deuxième conduit d'admission (50) pour pénétrer dans le cylindre (100) via la deuxième zone d'admission (500).

Le premier conduit d'admission (60) dit conduit de tourbillonnement, est agencé pour que le premier écoulement (F_{T}) dit écoulement de tourbillonnement puisse contribuer essentiellement au mouvement de rotation d'air dans le cylindre (100) et, donc, à la génération du rapport de tourbillonnement.

Le deuxième conduit d'admission (50) dit conduit de remplissage, est agencé pour que le deuxième écoulement (F_{R}) dit écoulement de remplissage, puisse remplir le cylindre (100) d'air. Par conséquent, le conduit de remplissage (50) est essentiellement responsable de la perméabilité.

Par analogie avec le dispositif selon le premier mode de réalisation de l'invention, le dispositif selon le deuxième mode de réalisation de l'invention comprend les moyens d'obturation capables d'obturer au moins partiellement au moins l'une et/ou l'autre des deux conduits (50, 60) d'admission. Comme précédemment, les moyens d'obturation peuvent comprendre, par exemple, un clapet mobile en translation de type guillotine (7) coulissante transversalement à l'axe privilégié du conduit d'admission concerné. A titre d'illustration, la figure 8 représente de manière très schématique (sans sa tige de commande) cette guillotine (7) coulissante transversalement à l'axe privilégié, par exemple, l'axe de symétrie (A₂8₂) du deuxième (50) conduit d'admission. Ainsi, il est possible de réguler, par exemple séparément :
- soit l'écoulement de remplissage (FR) essentiellement responsable de la perméabilité, en laissant l'écoulement de tourbillonnement (FT) inchangé,
- soit l'écoulement de tourbillonnement (FT) essentiellement responsable du rapport de tourbillonnement référencé (S) sur la figure 8, en laissant l'écoulement de remplissage (F_{R}) inchangé,
- soit réguler à la fois les deux écoulements (F_{R}, F_{T}).

Il est ainsi possible d'obtenir, pour chacun des points de fonctionnement du moteur, un compromis optimisé entre le rapport de tourbillonnement et la perméabilité.

Dans une autre variante du deuxième mode de réalisation de l'invention, les moyens d'obturation comprennent un clapet de type papillon, rotatif autour d'un axe de papillon perpendiculaire à l'axe privilégié du conduit d'admission, ce clapet étant monté à l'intérieur du conduit d'admission. Il s'agit du papillon analogue à celui du dispositif selon le premier mode de réalisation de l'invention décrit précédemment et illustré sur les figures 4a-d.

De même, dans une autre variante du deuxième mode de réalisation de l'invention, le corps formant les moyens d'obturation est au moins partiellement perméable à l'écoulement d'air dans le conduit d'admission. Des exemples de tels corps ont été décrits précédemment en rapport avec le dispositif selon le premier mode de réalisation de l'Invention et sont illustrés à l'aide de la figure 4d.

De même, dans une autre variante du deuxième mode de réalisation de l'invention, les moyens d'obturation comprennent un boisseau, rotatif autour d'un axe de boisseau perpendiculaire à l'axe privilégié du conduit d'admission, ce boisseau étant monté partiellement à l'extérieur du conduit d'admission. Il s'agit du boisseau analogue à celui du dispositif selon le premier mode de réalisation de l'invention décrit précédemment et illustré sur la figure 4e.

Par analogie avec le dispositif selon le premier mode de réalisation de l'invention, le dispositif selon le deuxième mode de réalisation de l'invention dispose des moyens avantageux visant à la fois à :
- maximiser la contribution dans le rapport de tourbillonnement de l'écoulement de tourbillonnement (FT), et
- minimiser la contribution dans le rapport de tourbillonnement de l'écoulement de remplissage (F_{R}).

Pour cela, dans une autre variante du deuxième mode de réalisation de l'invention, l'axe privilégié du conduit de tourbillonnement (60), par exemple, son axe de symétrie (A₁B₁), immédiatement en amont de la première chapelle d'admission par rapport au sens d'écoulement d'air (F_{T}) dans le conduit de tourbillonnement (60), est incliné d'un angle η, par exemple, d'un angle η tel que 0 ≤ η ≤ 130°, par rapport au plan (Z₁Q₁) comprenant à la fois l'axe privilégié du cylindre (100), par exemple son axe de symétrie (G₁H₁), et l'axe privilégié de la tige, par exemple son axe de symétrie (C₁D₁), la tige étant reliée à la tête de la première soupape d'admission.

Comme Illustré sur la figure 5b, dans une autre variante du deuxième mode de réalisation de l'invention, l'axe privilégié du conduit de tourbillonnement (60), par exemple, son axe de symétrie (A₁B₁), immédiatement en amont de la première chapelle d'admission par rapport au sens d'écoulement d'air (F_{T}) dans le conduit de tourbillonnement (60), est perpendiculaire (η = 90") au plan (Z₁Q₁) comprenant à la fois l'axe privilégié du cylindre (100), par exemple son axe de symétrie (G₁H₁), et l'axe privilégié de la tige, par exemple son axe de symétrie (C₁D₁), la tige étant reliée à la tête de la première soupape d'admission.

Dans une autre variante du deuxième mode de réalisation de l'invention, les parois, par exemple internes, de la partie finale du conduit de tourbillonnement (60) immédiatement en amont de la première chapelle d'admission par rapport au sens d'écoulement d'air (F_{T}) dans le conduit de tourbillonnement (60) et/ou les parois, par exemple internes, de la première chapelle d'admission au-dessus du siège de la première soupape d'admission sont sensiblement parallèles à l'axe privilégié du conduit de tourbillonnement (60), par exemple, son axe de symétrie (A₁B₁). Par conséquent, leur tangente (KU) forme, comme l'axe de symétrie (A₁B₁). l'angle η avec le plan (Z₁Q₁) comprenant à la fois l'axe privilégié du cylindre (100), par exemple son axe de symétrie (G₁H₁), et l'axe privilégié de la tige, par exemple son axe de symétrie (C₁D₁), la tige étant reliée à la tête de la première soupape d'admission, comme le montre schématiquement la figure 5a. Ces agencements permettent d'orienter le conduit (60) de tourbillonnement et, donc, l'écoulement de tourbillonnement (F_{T}), vers la paroi périphérique (210) (carter) du cylindre (100), En d'autres termes, une fois pénétré dans le cylindre, l'écoulement de tourbillonnement (F_{T}) se propage donc le long de la paroi périphérique (210) (carter) du cylindre (100) en bénéficiant de sa courbure pour déclencher davantage de tourbillonnement.

Dans une autre variante du deuxième mode de réalisation de l'invention, pour maximiser la contribution dans le rapport de tourbillonnement de l'écoulement de tourbillonnement (F_{T}), la distance entre l'axe privilégié, par exemple l'axe de symétrie (A₁B₁), du conduit (60) de tourbillonnement immédiatement en amont de la première chapelle d'admission par rapport au sens d'écoulement d'air (Fᵣ) dans le conduit de tourbillonnement (60) et l'axe privilégié, par exemple l'axe de symétrie (G₁H₁), du cylindre (100), est supérieure à la distance entre l'axe privilégié, par exemple l'axe de symétrie (C₁D₁), de la tige de la première soupape d'admission et l'axe privilégié, par exemple l'axe de symétrie (G₁H₁), du cylindre (100), comme cela est visible sur la figure 5b. Il s'agit de décentrer le conduit (60) de tourbillonnement par rapport à l'axe privilégié, par exemple l'axe de symétrie (C₁D₁), de la tige de la première soupape d'admission et, donc, du siège de la première soupape ou, autrement dit, de la première zone d'admission (600), Dans une autre variante du deuxième mode de réalisation de l'invention, l'axe privilégié, par exemple l'axe de symétrie (C₃D₃) de la première chapelle d'admission peut croiser l'axe privilégié, par exemple l'axe de symétrie (A₁B₁), du conduit (60) de tourbillonnement. Dans ce cas illustré sur la figure 5b, la première chapelle d'admission est donc également décentré par rapport à l'axe privilégié, par exemple l'axe de symétrie (C₁D₁), de la tige de la première soupape d'admission et, donc, du siège de la première soupape ou, autrement dit, de la première zone d'admission (600). Ce même résultat peut être obtenu lorsque l'axe privilégié, par exemple l'axe de symétrie (C₃D₃), de la première chapelle d'admission est tracé dans un plan, d'une part, parallèle à l'axe privilégié, par exemple l'axe de symétrie (A₁B₁), du conduit (60) de tourbillonnement et, d'autre part, disposé plus loin que l'axe privilégié, par exemple l'axe de symétrie (C₁D₁), de la tige de la première soupape d'admission de l'axe privilégié, par exemple l'axe de symétrie (G₁H₁), du cylindre (100). Ces agencements permettent d'orienter davantage le conduit (60) de tourbillonnement et, donc, l'écoulement de tourbillonnement (F_{T}), vers la paroi périphérique (210) (carter) du cylindre (100).

En outre, par analogie avec le dispositif selon le premier mode de réalisation de l'invention, les deux conduits d'admission (50, 60) débouchant dans les chapelles d'admission respectives forment, dans une autre variante du dispositif selon le deuxième mode de réalisation de l'invention, deux orifices de tailles différentes.

De même, dans une autre variante du dispositif selon le deuxième mode de réalisation de l'invention, les deux conduits d'admission (50, 60) forment deux passages d'air de volumes différents. Ainsi, dans l'exemple illustré de manière très schématique sur la figure 8, le conduit de tourbillonnement (60) apparaît dans le plan perpendiculaire à l'axe privilégié, par exemple, l'axe de symétrie (G₁H₁), du cylindre (100) plus étroit que le conduit (50) de remplissage. En d'autres termes, la section du conduit (60) de tourbillonnement perpendiculaire à son axe privilégié, par exemple son axe de symétrie (A₁B₁) rapportée à la section du conduit (50) de remplissage perpendiculaire à son axe privilégié, par exemple son axe de symétrie (A₂B₂), forme un ratio prédéterminé, dit deuxième ratio prédéterminé, par exemple, inférieur à un. Cela permet d'atteindre deux objectifs à la fois. D'une part, la section réduite du conduit (60) de tourbillonnement augmente la vitesse d'air dans ce dernier ce qui est bénéfique pour la création de tourbillonnement dans le cylindre. D'autre part, le conduit (50) de remplissage muni de la section élargie devient davantage perméable pour apporter le plus d'air possible dans le cylindre (100).

Dans le même esprit, dans une autre variante du dispositif selon le deuxième mode de réalisation de l'invention, le diamètre (L1) de la section de la première chapelle d'admission dans le plan perpendiculaire à l'axe privilégié, par exemple à l'axe de symétrie (C₁D₁) de la tige de la première soupape d'admission et/ou le diamètre (L1) de la section du conduit de tourbillonnement (60) perpendiculaire à son axe privilégié, par exemple son axe de symétrie (A₁B₁), immédiatement en amont de la première chapelle d'admission par rapport au sens d'écoulement d'air (F_{T}) dans le conduit de tourbillonnement (60), rapporté au diamètre intérieur (D1) du siège de la première soupape ou, autrement dit, de la première zone d'admission (600) forme un ratio prédéterminé dit troisième ratio prédéterminé. Dans l'exemple illustré sur la figure 5b, le diamètre référencé (L1) est inférieur à celui référencé (D1).

Cette réduction de la section de passage d'air au niveau de la première zone d'admission (600) (et du conduit de tourbillonnement) (60) permet avantageusement d'augmenter la vitesse d'air dans la direction orienté vers la paroi périphérique (210) (carter) du cylindre (100) favorable au tourbillonnement Bien entendu, cette réduction au niveau de la première zone d'admission (600) (et du conduit de tourbillonnement (60)) doit rester raisonnable pour éviter une dégradation excessive de perméabilité. A titre d'exemple, le troisième ratio L1/D1 ≈ 0.75 permet d'atteindre cet objectif (maximiser le rapport de tourbillonnement sans dégrader de manière excessive la perméabilité).

A titre de complémentarité, le diamètre (L2) de la section de la deuxième chapelle d'admission dans le plan perpendiculaire à l'axe privilégié, par exempte à l'axe de symétrie (C₂D₂) de la tige de la deuxième soupape d'admission et/ou le diamètre (L2) de la section du conduit de remplissage (50) perpendiculaire à son axe privilégié, par exemple son axe de symétrie (A₂B₂), immédiatement en amont de la première chapelle d'admission par rapport au sens d'écoulement d'air (F_{R}) dans le conduit de remplissage (50), rapporté au diamètre (D2) intérieur du siège de la deuxième soupape ou, autrement dit, de la deuxième zone d'admission (500) forme un ratio prédéterminé dit quatrième ratio prédéterminé. Dans l'exemple illustré sur la figure 6, le diamètre référence (L2) est sensiblement égal à celui référencé (D2). Autrement dit, le quatrième ratio prédéterminé est tel que ; L2/D2 ≈ 1 ce qui permet de maximiser la perméabilité du conduit (50) de remplissage.

Par analogie avec le dispositif selon le premier mode de réalisation de l'invention, pour minimiser la contribution dans le rapport de tourbillonnement de l'écoulement de remplissage (F_{R}), il faut diriger ce dernier le plus près possible de l'axe privilégié (G₁H₁) du cylindre (100) et, donc, de l'axe privilégié du bol de piston. En outre, le débit de l'écoulement de remplissage (F_{R}) doit se faire de manière la plus isotrope possible autour de l'axe privilégié, par exemple l'axe de symétrie (C₂D₂), de la deuxième tige reliée à la tête de deuxième soupape d'admission, en évitant de générer une quantité de mouvement dans le plan perpendiculaire à l'axe privilégié, par exemple l'axe de symétrie (C₂D₂), de la tige et/ou de l'axe privilégié, par exemple l'axe de symétrie (C₂D₂), du cylindre (100), qui serait favorable au tourbillonnement dans le cylindre (100) et/ou dans le bol du piston.

Pour cela, dans une autre variante du deuxième mode de réalisation de l'invention, le conduit de remplissage (50) débouche dans la deuxième chapelle d'admission (200) obturée par la deuxième soupape d'admission. Au moins les parois internes (201, 202) de la deuxième chapelle d'admission (200) sont, par exemple sensiblement cylindriques et parallèles à l'axe privilégié, par exemple l'axe de symétrie (C₂D₂) de la tige de la deuxième soupape d'admission. De même, l'axe privilégié de la deuxième chapelle d'admission (200), par exemple son axe de symétrie, peut être sensiblement parallèle à l'axe privilégié; par exemple l'axe de symétrie (C₂D₂) de la tige de la deuxième soupape d'admission. Dans l'exemple sur la figure 7, l'axe privilégié de la deuxième chapelle d'admission (200), par exemple son axe de symétrie, coïncide avec l'axe privilégié, par exemple l'axe de symétrie (C₂D₂) de la tige de la deuxième soupape d'admission.

Dans une autre variante du deuxième mode de réalisation de l'invention et comme illustré sur la figure 7, les parois internes (201, 202) de la deuxième chapelle d'admission (200) sont, faiblement incliné à l'axe privilégié, par exemple l'axe de symétrie (C₂D₂) de la tige de la deuxième soupape d'admission, en formant un angle v avec une droite (C₃D₃) parallèle à l'axe privilégié, par exemple l'axe de symétrie (C₂D₂) de la tige de la deuxième soupape d'admission, tel que 0° ≤ v ≤ 10°. De même, l'axe privilégié de la deuxième chapelle d'admission (200), par exemple son axe de symétrie, peut être faiblement incliné par rapport à l'axe privilégié, par exemple l'axe de symétrie (C₂D₂) de la tige de la deuxième soupape d'admission en formant un angle entre ces axes compris entre 0° et 10°. Ce cas est représentatif d'une variante de réalisation, illustrée de manière très schématique et simplifiée sur la figure 7, où certaines contraintes techniques imposent une déformation mineure de la deuxième chapelle d'admission (200). Le terme « déformation mineure » signifie que, malgré la déformation de la deuxième chapelle d'admission (200), sa forme globalement cylindrique avec son axe privilégié tendant vers l'axe privilégié, par exemple l'axe de symétrie (C₂D₂) de la tige de la deuxième soupape d'admission, reste préservée (figure 7).

En outre, la longueur (h_{R}) de la deuxième chapelle d'admission (200) le long de son axe privilégié, par exemple, son axe de symétrie, rapporté au diamètre interne (d_{R}) du siège de ta deuxième soupape d'admission, forme un ratio prédéterminé, dit premier ratio prédéterminé, par exemple : h_{R}/d_{R} ≈ 1.

Pour minimiser la contribution dans le rapport de tourbillonnement de l'écoulement de remplissage (F_{R}), dans une autre variante du deuxième mode de réalisation de l'invention, le conduit de remplissage (50) débouchant dans la deuxième chapelle d'admission (200) présente au moins une paroi interne de raccordement (55) incliné d'un angle β tel que 0° < β < 180°, par rapport à l'axe privilégié, par exemple l'axe de symétrie (C₂D₂), de la tige de la deuxième soupape d'admission. Dans l'exemple illustré sur la figure 7, la paroi interne de raccordement (55) est perpendiculaire (β = 90°) à l'axe privilégié, par exemple l'axe de symétrie (C₂D₂), de la tige de la deuxième soupape d'admission.

Dans une autre variante du deuxième mode de réalisation de l'invention, la paroi interne de raccordement (55) est située, d'une part, dans la partie du deuxième conduit d'admission la plus proche du cylindre (100), et, d'autre part, immédiatement en amont de la jonction formée entre le conduit (50) de remplissage et la deuxième chapelle (200) d'admission par rapport au sens d'écoulement d'air (F_{R}) dans le conduit (50) de remplissage.

En résumé, le dispositif d'admission selon le deuxième mode de réalisation de l'invention permet :
- d'atteindre un rapport de tourbillonnement dit bas (T₁₀₎, requis pour le bon fonctionnement du moteur, par exemple, à pleine charge, lorsque les deux conduits d'admission, le premier (60) dédié au tourbillonnement et deuxième (50) dédié au remplissage, débitent ensemble respectivement l'écoulement de tourbillonnement (F_{T}) et l'écoulement de remplissage (F_{R}) ;
- d'atteindre un rapport de tourbillonnement dit culminant (T₃₀), lorsque l'écoulement de tourbillonnement (F_{T}) débite seul via le premier (60) conduit d'admission dédié au tourbillonnement, le deuxième (50) conduit d'admission dédié au remplissage étant complètement obturée par les moyens d'obturation. Le rapport de tourbillonnement culminant est environ quatre fois supérieure au rapport de tourbillonnement bas évoqué précédemment : 4T₁₀ ≤ T₃₀ ≤ 10T₁₀ ;
- d'atteindre un rapport de tourbillonnement (T₀₀) quasi nul ou nul, voire négatif, lorsque l'écoulement de remplissage (F_{R}) débite seul via le deuxième (50) conduit d'admission dédié au remplissage, le premier (60) conduit d'admission dédié au tourbillonnement étant complètement obturée par les moyens d'obturation T₀₀ < T₁₀:
- d'atteindre un rapport de tourbillonnement dit haut (T₂₀), requis pour le bon fonctionnement du moteur, par exemple, à faible charge, lorsqu'un quotient seulement de l'écoulement de remplissage (F_{R}) débite via le deuxième (50) conduit d'admission dédié au remplissage partiellement (par exemple, à environ 80%) obturé par les moyens d'obturation, et l'écoulement de tourbillonnement (F_{T}) débite via le premier (60) conduit d'admission non obturée dédié au tourbillonnement : 2T₁₀ < T₂₀ < 4T₁₀.

Comme précisé précédemment, les moyens d'obturation sont réglables de manière progressive, Par conséquent, le dispositif selon le deuxième mode de réalisation de l'invention permet, bien entendu, d'atteindre un rapport de tourbillonnement intermédiaire (T_{X}) entre le rapport haut (T₂₀) et le rapport bas (T₁₀) ; T₁₀ ≤ T_{X} ≤ T₂₀, pour assurer le bon fonctionnement du moteur au cours de ses régimes de fonctionnement intermédiaires, respectivement entre sa faible charge (correspondant au rapport de tourbillonnement haut (T₂)) et sa pleine charge (correspondant au rapport de tourbillonnement bas (T₁)).

A titre de complémentarité, la figure 9 représente deux courbes de perméabilité (P) en fonction du rapport de tourbillonnement (S) illustrant schématiquement le gain en perméabilité obtenu à l'aide du dispositif selon l'invention (courbe référencé (P_{INV})) par rapport à un dispositif de l'état de la technique (courbe référencé (P_{ET})).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

Notamment, bien que l'invention ait été illustrée par un exemple d'utilisation dans un moteur Diesel à injection directe, on comprendra que l'invention puisse également être utilisée dans un moteur à essence et, d'une manière plus générale, chaque fois qu'il est souhaitable de créer un rapport de tourbillonnement variable en continu sans pour autant sacrifier la perméabilité, ni encombrer la zone d'admission par la tuyauterie supplémentaire.

## Revendications

1. Dispositif d'admission d'air dans un cylindre de moteur à combustion interne, en particulier de moteur Diesel à injection directe ou de moteur à essence, dans lequel le flux d'air à l'admission est macroscopiquement séparé en deux écoulements, l'un contribuant notamment au remplissage du cylindre, et l'autre contribuant notamment au mouvement de swirl de l'air dans le cylindre, comprenant
au moins un conduit d'admission d'air ou de mélange air/carburant reliant la culasse du moteur à la zone d'admission dans le cylindre comportant au moins une chapelle d'admission obturée par une soupape d'admission,
une paroi interne de séparation (4), divisant le conduit d'admission en une partie supérieure (5) et une partie inférieure (6),
et des moyens d'obturation réglables de manière progressive montés sur au moins l'une des parties du conduit d'admission d'air ou de mélange air/carburant,
**caractérisé en ce que** l'orifice d'une première partie (6) du conduit d'admission, destinée au swirl de l'air ou du mélange, qui débouche dans la chapelle d'admission à l'endroit le plus proche de la paroi périphérique (21) du cylindre (10) présente une section moindre dans le plan sensiblement perpendiculaire à l'axe privilégié (AB) du conduit d'admission (1), comparée à celle (H_{R}) de l'orifice de la partie supérieure (5) de conduit d'admission,
**en ce que** l'orifice de la seconde partie (5) du conduit d'admission (1), destinée au remplissage du cylindre, débouche dans la chapelle d'admission (2) plus près de l'axe privilégié (GH) du cylindre (10),
**en ce qu'**au moins l'orifice de la première partie (6) du conduit d'admission (1) dispose d'un tremplin (19) agencé sur le côté de l'orifice plus près de l'axe privilégié (GH) du cylindre (10) et orienté vers le côté de l'orifice le plus éloigné de l'axe privilégié (GH) du cylindre (10),
et **en ce que** la première partie (6) du conduit d'admission (1) et le tremplin (19) sont conformés et agencés de façon à ce que la puissance du mouvement du tourbillonnement, résultant du seul écoulement de tourbillonnement dans le cylindre en absence de l'écoulement de remplissage, soit bien supérieure au besoin réel du moteur en swirl.

2. Dispositif selon la revendication 1, **caractérisé en ce que** la chapelle d'admission (2) est raccordée au conduit d'admission (1) de façon que l'axe privilégié (AB) du conduit d'admission (1) soit incliné, par rapport à l'axe privilégié (CD) de la tige (3) reliée à la tête de soupape, d'un angle ϕ tel que 90° ≤ ϕ ≤ 180°.

3. Dispositif selon la revendication 1 ou 2, **caractérisé en ce que**
- la partie dite inférieure (6) du conduit débouche selon un angle α tel que 90° ≤ α ≤ 180°, dans un segment dit inférieur de la chapelle d'admission (2) obturé par la soupape d'admission, et
- la partie dite supérieure (5) du conduit débouche dans un autre segment dit supérieur de la chapelle d'admission (2), à l'opposé, par rapport au plan formé par la paroi interne de séparation (4), du segment inférieur obturé par la soupape d'admission le long de l'axe privilégié (CD) de la tige (3) reliée à la tête de soupape d'admission.

4. Dispositif selon la revendication 3, **caractérisé en ce que** le tremplin (19) est disposé de façon que sa tangente (LV) soit perpendiculaire au plan (ZQ) comprenant à la fois l'axe privilégié (GH) du cylindre (10) et l'axe privilégié (CD) de la tige (3) reliée à la tête de soupape d'admission.

5. Dispositif selon l'une des revendications 3 à 4, **caractérisé en ce qu'**au moins l'orifice de la partie supérieure (5) du conduit d'admission (2) débouchant dans le segment supérieur de la chapelle d'admission (2) au-dessus du siège de soupape d'admission le long de son axe privilégié (CD) présente au moins une courbure (18) de raccordement de rayon (R1) prédéterminé entre le conduit d'admission (1) et la chapelle d'admission (2), cette courbure de raccordement (18) étant tangente à au moins une droite de référence (JO) parallèle à l'axe privilégié (GH) du cylindre (10).

6. Dispositif selon la revendication 5, **caractérisé en ce que** le rayon (R1) prédéterminé de la courbure (18) de raccordement dans le plan comprenant l'axe privilégié (CD) de la tige (3) reliée à la tête de soupape d'admission rapporté au diamètre interne (d) du siège de la soupape d'admission dans le plan perpendiculaire à l'axe privilégié (CD) de la tige (3) reliée à la tête de soupape d'admission, forme un coefficient prédéterminé.

7. Dispositif d'admission d'air dans un cylindre de moteur à combustion interne, en particulier de moteur Diesel à injection directe ou de moteur à essence, dans lequel le flux d'air à l'admission est macroscopiquement séparé en deux écoulements, l'un contribuant notamment au remplissage du cylindre, et l'autre contribuant notamment au mouvement de swirl de l'air dans le cylindre, comprenant deux conduits d'admission (60, 50) d'air ou de mélange air/carburant reliant la culasse du moteur à la zone d'admission dans le cylindre comportant au moins une chapelle d'admission obturée par une soupape d'admission, dans lequel
- le premier conduit d'admission (60), destiné au swirl de l'air ou du mélange, débouche dans une première chapelle d'admission obturée par une première soupape d'admission, l'axe privilégié (C3D3) de la première chapelle d'admission étant parallèle à l'axe privilégié (C1D1) d'une tige de la première soupape d'admission, et la distance entre l'axe privilégié (A1B1) du premier (60) conduit d'admission immédiatement en amont de la première chapelle d'admission par rapport au sens d'écoulement d'air (FT) dans le conduit (60) de swirl et l'axe privilégié (G1H1) du cylindre (100) étant supérieure à la distance entre l'axe privilégié (C1D1) de la tige de la première soupape d'admission et l'axe privilégié (G1H1) du cylindre (100),
- le second conduit d'admission (50), destiné au remplissage du cylindre et sur lequel sont montés des moyens d'obturation réglables de manière progressive, débouche dans une deuxième chapelle (200) d'admission obturée par la deuxième soupape d'admission et dont au moins les parois internes (201, 202) sont sensiblement cylindriques, l'axe privilégié de la deuxième chapelle (200) d'admission étant sensiblement parallèle ou faiblement incliné par rapport à l'axe privilégié (C2D2) de la tige de la deuxième soupape d'admission, et la longueur (hR) de la deuxième chapelle (200) d'admission le long de son axe privilégié rapporté au diamètre interne (dR) du siège de la deuxième soupape d'admission formant un premier ratio prédéterminé, et
- l'axe privilégié (A1B1) du premier conduit d'admission (60) immédiatement en amont de la première chapelle d'admission par rapport au sens d'écoulement (FT) d'air et/ou de mélange air/carburant dans le premier (60) conduit d'admission, étant sensiblement perpendiculaire au plan (Z1Q1) comprenant à la fois l'axe privilégié (G1H1) du cylindre (100) et l'axe privilégié (C1D1) de la tige reliée à la tête de la première soupape d'admission,
**caractérisé en ce que** le premier conduit d'admission (60) et les moyens d'obturation sont agencés de façon à ce que la puissance du mouvement du tourbillonnement, résultant du seul écoulement de swirl dans le cylindre en absence de l'écoulement de remplissage, soit bien supérieure au besoin réel du moteur en swirl.

8. Dispositif selon la revendication 7, **caractérisé en ce que** le deuxième (50) conduit d'admission débouchant dans la deuxième chapelle (200) d'admission présente au moins une paroi interne de raccordement (55) incliné d'un angle β tel que 0° < β < 180°, par rapport à l'axe privilégié (C2D2) de la tige de la deuxième soupape d'admission.

9. Dispositif selon la revendication 8, **caractérisé en ce que** la paroi interne de raccordement (55) est située, d'une part, dans la partie du deuxième (50) conduit d'admission la plus proche du cylindre (100), et, d'autre part, immédiatement en amont de la jonction formée entre le deuxième (50) conduit d'admission et la deuxième chapelle (200) d'admission par rapport au sens d'écoulement (FR) d'air et/ou de mélange d'air/carburant dans le conduit d'admission (50).

10. Dispositif selon une des revendications 7 et 9, **caractérisé en ce que** la section du premier (60) conduit d'admission perpendiculaire à l'axe privilégié (A1B1) du premier (60) conduit d'admission rapportée à la section du deuxième (50) conduit d'admission perpendiculaire à l'axe privilégié (A2B2) du deuxième (50) conduit d'admission forme un deuxième ratio prédéterminé.

11. Dispositif selon l'une des revendications 7 à 10, **caractérisé en ce que** le diamètre (L1) de la section de la première chapelle d'admission dans le plan perpendiculaire à l'axe privilégié (C1D1) de la tige de la première soupape d'admission et/ou le diamètre (L1) de la section du premier (60) conduit d'admission perpendiculaire à son axe privilégié (A1B1) immédiatement en amont de la première chapelle d'admission par rapport au sens d'écoulement d'air (FT) dans le premier (60) conduit d'admission, rapporté au diamètre intérieur (D1) de la zone d'admission (600) de la première soupape d'admission forme un troisième ratio prédéterminé.

12. Dispositif selon l'une des revendications 3 à 11, **caractérisé en ce qu'**au moins la partie supérieure (5) ou le deuxième (50) conduit d'admission sont obturés au moins partiellement par les moyens d'obturation (7).

13. Dispositif selon l'une des revendications 1 à 12, **caractérisé en ce que** les moyens d'obturation comprennent un clapet mobile en translation de type guillotine (7) coulissante transversalement à l'axe privilégié du conduit d'admission.

14. Dispositif selon l'une des revendications 1 à 13, **caractérisé en ce que** les moyens d'obturation comprennent un clapet de type papillon (12), rotatif autour d'un axe (13) de papillon (12) perpendiculaire à l'axe privilégié (AB) du conduit d'admission (1), l'axe (13) de papillon (12) étant sensiblement parallèle au plan de la paroi interne de séparation (4), ce clapet étant monté à l'intérieur du conduit d'admission (1).

15. Dispositif selon l'une des revendications 3 à 8, **caractérisé en ce que** les moyens d'obturation comprennent un boisseau (11), rotatif autour d'un axe de boisseau perpendiculaire à l'axe privilégié du conduit d'admission (1), l'axe de boisseau (11) étant sensiblement parallèle au plan de la paroi interne de séparation (4), ce boisseau (11) étant monté partiellement à l'extérieur du conduit d'admission (1), conformément à l'une des configurations choisies parmi les configurations suivantes : (a) partiellement à l'extérieur du conduit d'admission (1) dans la partie inférieure (6) du conduit d'admission (1) ; (b) partiellement à l'extérieur du conduit d'admission (1) dans la partie supérieure (5) du conduit d'admission (1).

16. Procédé d'admission d'air ou de mélange air/carburant, mettant en œuvre un dispositif selon une des revendications 1 à 14 avec un moyen de mesure de la charge du moteur, comprenant au moins :
un réglage de l'obturation de la partie supérieure (5) ou du deuxième (50) conduit d'admission du flux de remplissage (F_{R}) en déplaçant un moyen d'obturation (7 ou 12), **caractérisé en ce qu'**il permet d'atteindre le rapport de tourbillonnement recherché en fonction de la charge du moteur mesurée,
de sorte que l'obturation de la partie supérieure (5) ou du deuxième (50) conduit d'admission du flux de remplissage (F_{R}) ne soit pas totale, pour atteindre un rapport de tourbillonnement dit haut (T₂ ou T₂₀) lors du fonctionnement du moteur à faible charge, et
de sorte que l'obturation de la partie supérieure (5) ou du deuxième (50) conduit d'admission du flux de remplissage (F_{R}) soit nulle, pour atteindre un rapport de tourbillonnement dit bas (T₁ ou T₁₀) lors du fonctionnement du moteur à pleine charge.

## Patentansprüche

1. Lufteinlassvorrichtung für einen Zylinder einer Brennkraftmaschine, insbesondere einen Dieselmotor mit Direkteinspritzung oder einen Ottomotor, in welcher der Luftstrom im Einlass makroskopisch in zwei Strömungen getrennt wird, wobei die eine insbesondere zur Zylinderfüllung beiträgt und die andere insbesondere zur Drallbewegung der Luft im Zylinder beiträgt, umfassend
mindestens einen Luft- oder Luft/Kraftstoff-Gemisch-Einlasskanal, der den Zylinderkopf des Motors mit dem Einlassbereich im Zylinder verbindet, der mindestens ein Einlassgewölbe beinhaltet, das durch ein Einlassventil verschlossen wird,
eine Trenninnenwand (4), die den Einlasskanal in einen oberen Teil (5) und einen unteren Teil (6) teilt,
und stufenlos verstellbare Verschließeinrichtungen, die an mindestens einem der Teile des Luft- oder Luft/Kraftstoff-Gemisch-Einlasskanals montiert sind, **dadurch gekennzeichnet, dass** die Öffnung eines für den Drall der Luft oder des Gemisches bestimmten ersten Teils (6) des Einlasskanals, der in dem Einlassgewölbe an der Stelle mündet, die der Umfangswand (21) des Zylinders (10) am nächsten ist, einen Querschnitt aufweist, der in der im Wesentlichen senkrecht zur bevorzugten Achse (AB) des Einlasskanals (1) verlaufenden Ebene verglichen mit dem (H_{R}) der Öffnung des oberen Teils (5) des Einlasskanals kleiner ist,
dass die Öffnung des zur Zylinderfüllung bestimmten zweiten Teils (5) des Einlasskanals (1) im Einlassgewölbe (2) näher an der bevorzugten Achse (GH) des Zylinders (10) mündet,
dass mindestens die Öffnung des ersten Teils (6) des Einlasskanals (1) über eine Schanze (19) verfügt, die auf der Seite der Öffnung eingerichtet ist, die der bevorzugten Achse (GH) des Zylinders (10) näher ist, und zu der Seite der Öffnung gerichtet ist, die von der bevorzugten Achse (GH) des Zylinders (10) am weitesten entfernt ist,
und dass der erste Teil (6) des Einlasskanals (1) und die Schanze (19) so ausgebildet und eingerichtet sind, dass die Leistung der Bewegung der Verwirbelung, die aus der bloßen Verwirbelungsströmung im Zylinder bei Nichtvorliegen der Füllströmung resultiert, deutlich über dem tatsächlichen Drallbedarf des Motors liegt.

2. Vorrichtung nach Anspruch 1, **dadurch gekennzeichnet, dass** das Einlassgewölbe (2) so an den Einlasskanal (1) angeschlossen ist, dass die bevorzugte Achse (AB) des Einlasskanals (1) in Bezug auf die bevorzugte Achse (CD) des mit dem Ventilteller verbundenen Schafts (3) einen derartigen Winkel ϕ bildet, dass 90° ≤ ϕ ≤ 180°.

3. Vorrichtung nach Anspruch 1 oder 2, **dadurch gekennzeichnet, dass**
- der untere Teil (6) des Kanals gemäß einem derartigen Winkel α in einem durch das Einlassventil verschlossenen unteren Segment des Einlassgewölbes (2) mündet, dass 90° ≤ ϕ ≤ 180°, und
- der obere Teil (5) des Kanals in einem anderen, oberen Segment des Einlassgewölbes (2) mündet, in Bezug auf die durch die Trenninnenwand (4) gebildete Ebene entgegengesetzt zu dem unteren Segment, das durch das Einlassventil entlang der bevorzugten Achse (CD) des mit dem Einlassventilteller verbundenen Schaftes (3) verschlossen wird.

4. Vorrichtung nach Anspruch 3, **dadurch gekennzeichnet, dass** die Schanze (19) so angeordnet ist, dass ihre Tangente (LV) senkrecht zu der Ebene (ZQ) verläuft, die sowohl die bevorzugte Achse (GH) des Zylinders (10) als auch die bevorzugte Achse (CD) des mit dem Einlassventilteller verbundenen Schaftes (3) umfasst.

5. Vorrichtung nach einem der Ansprüche 3 bis 4, **dadurch gekennzeichnet, dass** mindestens die Öffnung des oberen Teils (5) des Einlasskanals (2), die im oberen Segment des Einlassgewölbes (2) oberhalb des Einlassventilsitzes entlang seiner bevorzugten Achse (CD) mündet, mindestens eine Übergangskrümmung (18) mit dem vorbestimmten Radius (R1) zwischen dem Einlasskanal (1) und dem Einlassgewölbe (2) aufweist, wobei diese Übergangskrümmung (18) mindestens eine Referenzgerade (JO) tangiert, die parallel zur bevorzugten Achse (GH) des Zylinders (10) ist.

6. Vorrichtung nach Anspruch 5, **dadurch gekennzeichnet, dass** der vorbestimmte Radius (R1) der Übergangskrümmung (18) in der Ebene, welche die bevorzugte Achse (CD) des mit dem Einlassventilteller verbundenen Schaftes (3) umfasst, bezogen auf den Innendurchmesser (d) des Einlassventilsitzes in der senkrecht zur bevorzugten Achse (CD) des mit dem Einlassventilteller verbundenen Schaftes (3) verlaufenden Ebene einen vorbestimmten Koeffizienten bildet.

7. Lufteinlassvorrichtung für einen Zylinder einer Brennkraftmaschine, insbesondere einen Dieselmotor mit Direkteinspritzung oder einen Ottomotor, bei welcher der Luftstrom im Einlass makroskopisch in zwei Strömungen getrennt wird, wobei die eine insbesondere zur Zylinderfüllung beiträgt und die andere insbesondere zur Drallbewegung der Luft im Zylinder beiträgt, umfassend zwei Luft- oder Luft/KraftstoffGemisch-Einlasskanäle (60, 50), die den Zylinderkopf des Motors mit dem Einlassbereich im Zylinder verbinden, der mindestens ein Einlassgewölbe beinhaltet, das durch ein Einlassventil verschlossen wird, bei welcher
- der für den Drall der Luft oder des Gemisches bestimmte erste Einlasskanal (60) in einem ersten Einlassgewölbe mündet, das durch ein erstes Einlassventil verschlossen wird, wobei die bevorzugte Achse (C3D3) des ersten Einlassgewölbes parallel zur bevorzugten Achse (C1D1) eines Schaftes des ersten Einlassventils verläuft und der Abstand zwischen der bevorzugten Achse (A1B1) des ersten (60) Einlasskanals unmittelbar stromauf des ersten Einlassgewölbes, in Bezug auf die Luftströmungsrichtung (FT) in dem Drallkanal (60), und der bevorzugten Achse (G1H1) des Zylinders (100) größer ist als der Abstand zwischen der bevorzugten Achse (C1D1) des Schaftes des ersten Einlassventils und der bevorzugten Achse (G1H1) des Zylinders (100),
- der zweite Einlasskanal (50), der zur Zylinderfüllung bestimmt ist und an dem stufenlos verstellbare Verschließeinrichtungen montiert sind, in einem zweiten Einlassgewölbe (200) mündet, das durch das zweite Einlassventil verschlossen wird und von dem mindestens die Innenwände (201, 202) im Wesentlichen zylindrisch sind, wobei die bevorzugte Achse des zweiten Einlassgewölbes (200) im Wesentlichen parallel oder leicht geneigt zur bevorzugten Achse (C2D2) des Schaftes des zweiten Einlassventils ist und die Länge (hR) des zweiten Einlassgewölbes (200) entlang seiner bevorzugten Achse, bezogen auf den Innendurchmesser (dR) des Sitzes des zweiten Einlassventils, eine erste vorbestimmte Verhältniszahl bildet, und
- die bevorzugte Achse (A1B1) des ersten Einlasskanals (60) unmittelbar stromauf des ersten Einlassgewölbes, in Bezug auf die Luft- und/oder Luft/KraftstoffGemisch-Strömungsrichtung (FT) im ersten (60) Einlasskanal, im Wesentlichen senkrecht zu der Ebene (Z1Q1) verläuft, die sowohl die bevorzugte Achse (G1H1) des Zylinders (100) als auch die bevorzugte Achse (C1D1) des mit dem Teller des ersten Einlassventils verbundenen Schaftes umfasst,
**dadurch gekennzeichnet, dass** der erste Einlasskanal (60) und die Verschließeinrichtungen so eingerichtet sind, dass die Leistung der Bewegung der Verwirbelung, die aus der bloßen Drallströmung im Zylinder bei Nichtvorliegen der Füllströmung resultiert, deutlich über dem tatsächlichen Drallbedarf des Motors liegt.

8. Vorrichtung nach Anspruch 7, **dadurch gekennzeichnet, dass** der zweite (50) Einlasskanal, der im zweiten Einlassgewölbe (200) mündet, mindestens eine Übergangsinnenwand (55) aufweist, die um einen derartigen Winkel β in Bezug auf die bevorzugte Achse (C2D2) des Schaftes des zweiten Einlassventils geneigt ist, dass 0° < β < 180°.

9. Vorrichtung nach Anspruch 8, **dadurch gekennzeichnet, dass** die Übergangsinnenwand (55) zum einen in dem Teil des zweiten Einlasskanals (50) gelegen ist, der dem Zylinder (100) am nächsten ist, und zum anderen unmittelbar stromauf der Verbindung, in Bezug auf die Luft- oder Luft/Kraftstoff-Gemisch-Strömungsrichtung (FR) in dem Einlasskanal (50), die zwischen dem zweiten (50) Einlasskanal und dem zweiten Einlassgewölbe (200) gebildet wird.

10. Vorrichtung nach einem der Ansprüche 7 und 9, **dadurch gekennzeichnet, dass** der Querschnitt des ersten (60) Einlasskanals senkrecht zu der bevorzugten Achse (A1B1) des ersten (60) Einlasskanals bezogen auf den Querschnitt des zweiten (50) Einlasskanals senkrecht zu der bevorzugten Achse (A2B2) des zweiten Einlasskanals (50) eine vorbestimmte zweite Verhältniszahl bildet.

11. Vorrichtung nach einem der Ansprüche 7 bis 10, **dadurch gekennzeichnet, dass** der Durchmesser (L1) des Querschnitts des ersten Einlassgewölbes in der senkrecht zur bevorzugten Achse (C1D1) des Schafts des ersten Einlassventils verlaufenden Ebene und/oder der Durchmesser (L1) des Querschnitts des ersten (60) Einlasskanals senkrecht zu seiner bevorzugten Achse (A1B1) unmittelbar stromauf des ersten Einlassgewölbes, in Bezug auf die Luftströmungsrichtung (FT) in dem ersten (60) Einlasskanal, bezogen auf den Innendurchmesser (D1) des Einlassbereichs (600) des ersten Einlassventils eine dritte vorbestimmte Verhältniszahl bildet.

12. Vorrichtung nach einem der Ansprüche 3 bis 11, **dadurch gekennzeichnet, dass** mindestens der obere Teil (5) oder der zweite (50) Einlasskanal mindestens teilweise durch die Verschließeinrichtungen (7) verschlossen wird.

13. Vorrichtung nach einem der Ansprüche 1 bis 12, **dadurch gekennzeichnet, dass** die Verschließeinrichtungen eine translatorisch bewegliche Klappe vom Guillotine-Typ (7) umfassen, die quer zur bevorzugten Achse des Einlasskanals verschiebbar ist.

14. Vorrichtung nach einem der Ansprüche 1 bis 13, **dadurch gekennzeichnet, dass** die Verschließeinrichtungen eine Klappe vom Drosselklappentyp (12) umfassen, die um eine Achse (13) der Drosselklappe (12) senkrecht zu der bevorzugten Achse (AB) des Einlasskanals (1) drehbar ist, wobei die Achse (13) der Drosselklappe (12) im Wesentlichen parallel zur Ebene der Trenninnenwand (4) ist, wobei diese Klappe im Innern des Einlasskanals (1) montiert ist.

15. Vorrichtung nach einem der Ansprüche 3 bis 8, **dadurch gekennzeichnet, dass** die Verschließeinrichtungen ein Küken (11) umfassen, das um eine Kükenachse senkrecht zu der bevorzugten Achse des Einlasskanals (1) drehbar ist, wobei die Kükenachse (11) im Wesentlichen parallel zur Ebene der Trenninnenwand (4) ist, wobei dieses Küken (11) teilweise außerhalb des Einlasskanals (1) montiert ist gemäß einer der Ausgestaltungen, die unter den folgenden Ausgestaltungen gewählt sind: (a) teilweise außerhalb des Einlasskanals (1) im unteren Teil (6) des Einlasskanals (1); (b) teilweise außerhalb des Einlasskanals (1) im oberen Teil (5) des Einlasskanals (1).

16. Verfahren zum Einlassen von Luft oder Luft/Kraftstoff-Gemisch, bei dem eine Vorrichtung nach einem der Ansprüche 1 bis 14 mit einer Messeinrichtung für die Motorlast eingesetzt wird, umfassend mindestens:
eine Regelung des Verschlusses des oberen Teils (5) oder des zweiten (50) Einlasskanals des Füllstroms (F_{R}) durch Verlagern einer Verschließeinrichtung (7 oder 12), **dadurch gekennzeichnet, dass** es ermöglicht, das in Abhängigkeit von der gemessenen Motorlast angestrebte Verwirbelungsverhältnis zu erreichen,
so dass der Verschluss des oberen Teils (5) oder des zweiten (50) Einlasskanals des Füllstroms (F_{R}) nicht vollständig ist, um ein sogenanntes hohes Verwirbelungsverhältnis (T₂ oder T₂₀) beim Betrieb des Motors mit geringer Last zu erreichen, und
so, dass der Verschluss des oberen Teils (5) oder des zweiten (50) Einlasskanals des Füllstroms (F_{R}) null ist, um ein sogenanntes unteres Verwirbelungsverhältnis (T₁ oder T₁₀) beim Betrieb des Motors mit Volllast zu erreichen.

## Claims

1. Device for the intake of air into a cylinder of an internal combustion engine, in particular a direct injection diesel engine or a petrol engine, in which the flow of air at the intake is macroscopically separated into two flows, one contributing in particular to filling the cylinder, and the other contributing in particular to the swirl movement of the air in the cylinder, comprising
at least one air intake duct or air/fuel mixture duct connecting the cylinder head of the engine to the intake zone in the cylinder comprising at least one intake valve box that is closed off by an intake valve,
an internal separating wall (4) that divides the intake duct into an upper part (5) and a lower part (6),
and progressively adjustable closing means mounted on at least one of the parts of the air intake duct or air/fuel mixture duct,
**characterized in that** the orifice of a first part (6) of the intake duct, intended for swirling the air or the mixture, which opens into the intake valve box at the point closest to the peripheral wall (21) of the cylinder (10) has a smaller cross section in the plane essentially perpendicular to the primary axis (AB) of the intake duct (1), compared to that (H_{R}) of the orifice of the upper part (5) of the intake duct,
**in that** the orifice of the second part (5) of the intake duct (1), intended for filling the cylinder, opens into the intake valve box (2) closer to the primary axis (GH) of the cylinder (10),
**in that** at least the orifice of the first part (6) of the intake duct (1) has a ramp (19) arranged on the side of the orifice closest to the primary axis (GH) of the cylinder (10) and oriented towards that side of the orifice that is furthest from the primary axis (GH) of the cylinder (10),
and **in that** the first part (6) of the intake duct (1) and the ramp (19) are shaped and arranged such that the power of the movement of the swirling, resulting from the only swirling flow in the cylinder in the absence of the filling flow, is much greater than the engine's real swirl requirement.

2. Device according to Claim 1, **characterized in that** the intake valve box (2) is connected to the intake duct (1) such that the primary axis (AB) of the intake duct (1) is inclined, relative to the primary axis (CD) of the stem (3) connected to the valve head, by an angle ϕ such that 90° ≤ ϕ ≤ 180°.

3. Device according to Claim 1 or 2, **characterized in that**
- the so-called lower part (6) of the duct opens with an angle α, such that 90° ≤ α ≤ 180°, into a so-called lower segment of the intake valve box (2) that is closed off by the intake valve, and
- the so-called upper part (5) of the duct opens into another, so-called upper segment of the intake valve box (2) which is opposite, with respect to the plane formed by the internal separating wall (4), the lower segment that is closed off by the intake valve along the primary axis (CD) of the stem (3) connected to the intake valve head.

4. Device according to Claim 3, **characterized in that** the ramp (19) is arranged such that its tangent (LV) is perpendicular to the plane (ZQ) that comprises both the primary axis (GH) of the cylinder (10) and the primary axis (CD) of the stem (3) connected to the intake valve head.

5. Device according to either of Claims 3 and 4, **characterized in that** at least the orifice of the upper part (5) of the intake duct (2) opening into the upper segment of the intake valve box (2) above the intake valve seat along its primary axis (CD) has at least one connecting curvature (18) of predetermined radius (R1) between the intake duct (1) and the intake valve box (2), this connecting curvature (18) being tangential to at least one reference straight line (JO) parallel to the primary axis (GH) of the cylinder (10).

6. Device according to Claim 5, **characterized in that** the predetermined radius (R1) of the connecting curvature (18) in the plane comprising the primary axis (CD) of the stem (3) connected to the intake valve head related to the internal diameter (d) of the intake valve seat in the plane perpendicular to the primary axis (CD) of the stem (3) connected to the intake valve head forms a predetermined coefficient.

7. Device for the intake of air into a cylinder of an internal combustion engine, in particular a direct injection diesel engine or a petrol engine, in which the flow of air at the intake is macroscopically separated into two flows, one contributing in particular to filling the cylinder, and the other contributing in particular to the swirl movement of the air in the cylinder, comprising two air intake ducts or air/fuel mixture ducts (60, 50) connecting the cylinder head of the engine to the intake zone in the cylinder comprising at least one intake valve box that is closed off by an intake valve, in which
- the first intake duct (60), intended for swirling the air or the mixture, opens into a first intake valve box that is closed off by a first intake valve, the primary axis (C3D3) of the first intake valve box being parallel to the primary axis (C1D1) of a stem of the first intake valve, and the distance between the primary axis (A1B1) of the first (60) intake duct immediately upstream of the first intake valve box with respect to the direction of flow of air (FT) in the swirl duct (60) and the primary axis (G1H1) of the cylinder (100) being greater than the distance between the primary axis (C1D1) of the stem of the first intake valve and the primary axis (G1H1) of the cylinder (100),
- the second intake duct (50), which is intended for filling the cylinder and on which are mounted progressively adjustable closing means, opens into a second intake valve box (200) that is closed off by the second intake valve and of which at least the internal walls (201, 202) are essentially cylindrical, the primary axis of the second intake valve box (200) being essentially parallel or slightly inclined with respect to the primary axis (C2D2) of the stem of the second intake valve, and the length (hR) of the second intake valve box (200) along its primary axis related to the internal diameter (dR) of the seat of the second intake valve forming a first predetermined ratio, and
- the primary axis (A1B1) of the first intake duct (60) immediately upstream of the first intake valve box with respect to the direction of flow (FT) of air and/or of fuel/air mixture in the first (60) intake duct, being essentially perpendicular to the plane (Z1Q1) comprising both the primary axis (G1H1) of the cylinder (100) and the primary axis (C1D1) of the stem connected to the head of the first intake valve,
**characterized in that** the first intake duct (60) and the closing means are arranged such that the power of the movement of the swirling, resulting from the only swirling flow in the cylinder in the absence of the filling flow, is much greater than the engine's real swirl requirement.

8. Device according to Claim 7, **characterized in that** the second (50) intake duct opening into the second intake valve box (200) has at least one internal connecting wall (55) inclined at an angle β such that 0°≤ β ≤ 180° with respect to the primary axis (C2D2) of the stem of the second intake valve.

9. Device according to Claim 8, **characterized in that** the internal connecting wall (55) is located, on one hand, **in that** part of the second (50) intake duct closest to the cylinder (100), and, on the other hand, immediately upstream of the junction formed between the second (50) intake duct and the second intake valve box (200) with respect to the direction of flow (FR) of air and/or of fuel/air mixture in the intake duct (50).

10. Device according to either of Claims 7 and 9, **characterized in that** the cross section of the first (60) intake duct perpendicular to the primary axis (A1B1) of the first (60) intake duct related to the cross section of the second (50) intake duct perpendicular to the primary axis (A2B2) of the second (50) intake duct forms a second predetermined ratio.

11. Device according to one of Claims 7 to 10, **characterized in that** the diameter (L1) of the cross section of the first intake valve box in the plane perpendicular to the primary axis (C1D1) of the stem of the first intake valve and/or the diameter (L1) of the cross section of the first (60) intake duct perpendicular to its primary axis (A1B1) immediately upstream of the first intake valve box with respect to the direction of flow of air (FT) in the first (60) intake duct, related to the internal diameter (D1) of the intake zone (600) of the first intake valve forms a third predetermined ratio.

12. Device according to one of Claims 3 to 11, **characterized in that** at least the upper part (5) or the second (50) intake duct are at least partially closed off by the closing means (7).

13. Device according to one of Claims 1 to 12, **characterized in that** the closing means comprise a flap that is able to move in translation, of the guillotine type (7) sliding transversely to the primary axis of the intake duct.

14. Device according to one of Claims 1 to 13, **characterized in that** the closing means comprise a butterfly-type flap (12) that is able to rotate about an axis (13) of the butterfly (12) that is perpendicular to the primary axis (AB) of the intake duct (1), the axis (13) of the butterfly (12) being essentially parallel to the plane of the internal separating wall (4), this flap being mounted inside the intake duct (1).

15. Device according to one of Claims 3 to 8, **characterized in that** the closing means comprise a barrel (11) that is able to rotate about a barrel axis perpendicular to the primary axis of the intake duct (1), the axis of the barrel (11) being essentially parallel to the plane of the internal separating wall (4), this barrel (11) being mounted partially outside the intake duct (1), according to one of the configurations chosen from among the following configurations: (a) partially outside the intake duct (1) in the lower part (6) of the intake duct (1); (b) partially outside the intake duct (1) in the upper part (5) of the intake duct (1).

16. Method for admitting air or a fuel/air mixture, implementing a device according to one of Claims 1 to 14 with a means for measuring the engine load, comprising at least:
adjustment of the closing of the upper part (5) or of the second (50) intake duct of the filling flow (F_{R}) by moving a closing means (7 or 12), **characterized in that** it makes it possible to achieve the desired swirling ratio as a function of the measured engine load,
such that the closing of the upper part (5) or of the second (50) intake duct of the filling flow (F_{R}) is not total, to achieve a so-called high swirling ratio (T₂ or T₂₀) when the engine is operating under low load, and
such that the closing of the upper part (5) or of the second (50) intake duct of the filling flow (F_{R}) is zero, to achieve a so-called low swirling ratio (T₁ or T₁₀) when the engine is operating under full load.
